Europäisches Patentamt

European Patent Office (11) Publication number: **0 384 986**

Office européen des brevets **A2**

## EUROPEAN PATENT APPLICATION

(21) Application number: 89124084.8

(51) Int. Cl.5: **G06F 15/20**

(22) Date of filing: 28.12.89

(30) Priority: 28.02.89 US 317248

(43) Date of publication of application:
05.09.90 Bulletin 90/36

(84) Designated Contracting States:
DE FR GB IT

(71) Applicant: **International Business Machines Corporation**
**Old Orchard Road**
**Armonk, N.Y. 10504(US)**

(72) Inventor: **Cassorla, Elie**
**44 Watch Hill Rd.**
**Croton-on-Hudson, NY 10520(US)**
Inventor: **Moran, Michael Edward**
**326 Kennedy Drive**
**Spring Valley, NY 10977(US)**
Inventor: **Slater, James J.**
**4814 Macintosh Place**
**Boulder Colorado 80301(US)**
Inventor: **Unger, Jay**
**Knollwood Court**
**Mohegan Lake, NY 10547(US)**

(74) Representative: **Jost, Ottokarl, Dipl.-Ing.**
**IBM Deutschland GmbH Patentwesen und**
**Urheberrecht Schönaicher Strasse 220**
**D-7030 Böblingen(DE)**

(54) Method for displaying online information.

(57) A method for creating online information from the same marked-up source material used to create printed information such as a word processor or a mark-up language source use with a text formatter. A book data stream is provided, in a new intermediate format for storing online information, specifically designed to be used by a book display program. This data stream captures and preserves structural information about books. It is uniquely suited to display online books in a very usable manner on a variety of display devices. Also provided is a new kind of program, (a book display program) for manipulating the book data stream, and allowing users to interact with the online information. A distinguishing characteristic of the book display program is its use of the metaphor of a hard copy book on the display screen. It lets readers treat online books like hard copy books. This program uses the book data stream (described above) as its input.

# F I G. 1

```
┌─────────────┐
│   SOURCE    │
│  DOCUMENT   │──10
│    FILE     │
└─────────────┘
       │
       ▼
┌─────────────┐        20      30
│    TEXT     │                 │
│  FORMATTER  │────────┌─────────────┐
│             │        │   MARKUP    │
└─────────────┘        │ DEFINITIONS │
       │               └─────────────┘
       │──40
       ▼
┌─────────────┐
│    POST     │
│  PROCESSOR  │──50
│ (TEXT PHASE)│
└─────────────┘
       │
       │──60
       ▼           70
┌─────────────┐         51        52        53
│  INDEXER1   │     ┌────────┐ ┌────────┐ ┌────────┐
│ COMPRESSOR  │     │PICTURE │ │PICTURE │ │PICTURE │
└─────────────┘     │ FILES  │ │ FILES  │ │ FILES  │
       │            │(GRAPHICS)│ │        │ │(IMAGE) │
       │            └────────┘ └────────┘ └────────┘
       ▼                 │          │          │
┌─────────────┐          ▼          ▼          ▼
│  BOOK FILE  │     ┌──────────────────────────────┐
│ STORED ON   │◄────│       POST PROCESSOR         │
│    DISK     │     │      (PICTURE PHASE)         │
└─────────────┘     └──────────────────────────────┘
       │                          │
       80                        50A
```

# METHOD FOR DISPLAYING ONLINE INFORMATION

The present invention relates generally to the use of computers for displaying information and more particularly to a method for displaying data in a book like format for use on-line.

Creating, maintaining, and reading online information has long presented problems for both the authors and the readers of online information.

The invention makes online information easier to create and maintain since it accepts existing information formats, and requires only the application of existing author skills and techniques used for creating printed books. It also makes online information more usable than ever before by implementing the hard copy metaphor more completely than has been done previously.

Current techniques for creating online information result in information that is hard to use for reading and referencing. The prior art attempts to overcome this by requiring a lot of manual labor to create and maintain the online information.

Prior art techniques also demand that authors learn skills that differ from those they already possess for creating printed information. Current techniques provide only a small range of reader function automatically, requiring authors to manually provide the full range of function for each piece of information they create. This makes it very expensive to keep the content of printed and online information synchronized. This invention provides the full range of capability for the reader based on the original printer-specified input, without manual intervention by authors. This makes it possible for authors to produce highly usable online information from exactly the same source material used to produce the printed information, without having to learn new skills. Current techniques involve (1) creating separate hand-crafted versions of the text for online viewing, (2) displaying the text on terminals monolithically with no provision for navigation, or (3) making the text available under clear-text browsers, with only primitive navigation functions.

Prior art techniques require that readers of online information think about and interact with the information in a new way. This invention allows readers to think about and interact with the information just as they do with printed books. Readers can use this invention to read online books, make margin notes, leave bookmarks, and use many other familiar techniques learned for using printed books.

In accordance with a preferred but nonetheless illustrative embodiment demonstrating objects and features of the present invention there is provided a novel method for creating online information.

This invention creates online information from the same marked-up source material used to create printed information such as a word processor or a markup language source file used with a text formatter.

The invention also provides a book data stream, in a new intermediate format for storing online information, specifically designed to be used by a book display program. This data stream is a means of capturing and preserving structural information about books. It is uniquely suited to display online books in a very usable manner on a variety of display devices.

Also provided is a new kind of program, (a book display program) for manipulating the book data stream, and allowing users to interact with the online information. A distinguishing characteristic of the book display program is its use of the metaphor of a hard copy book on the display screen. It lets readers treat online books much more like hard copy books than was previously possible. This program uses the book data stream (described above) as its input.

It is thus an object of the invention to provide a method for creating an online book for viewing at a computer terminal.

It is a further object to provide a method for creating an online book using source developed for a printed version of the book with little or no additional work.

It is still another object to provide a method for displaying an online book that offers all the function a reader obtains from a hardcopy version of the book.

It is yet another object to provide a book display program for displaying a book online that preserves the author's printed formatting intent in a version for use on a computer terminal.

These and other objects, advantages and features will become more apparent upon reference to the following description and the annexed drawings.

FIG. 1 shows the general method for creating online book files according to the present invention;

FIG. 2 shows the general method for reading online books according to the present invention;

FIG. 3 shows an example of control sequence processing;

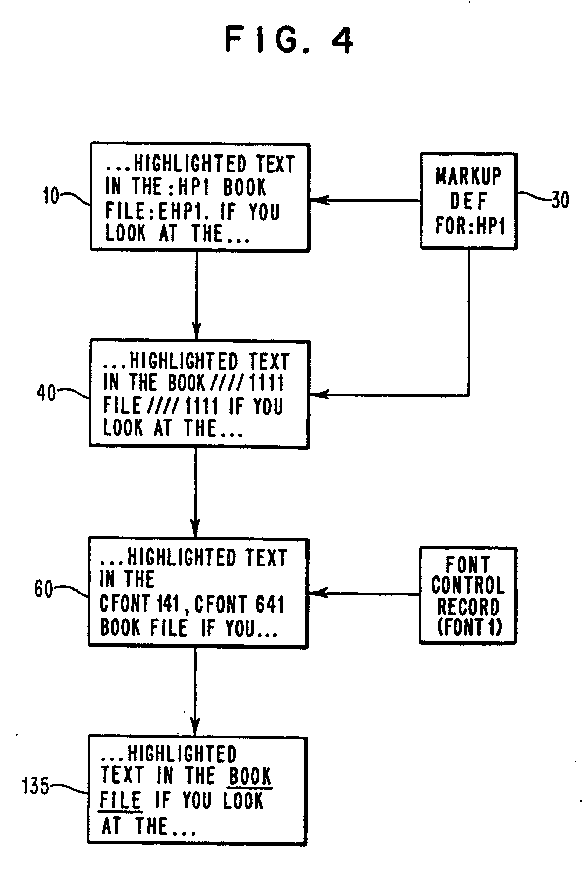

FIG. 4 shows an example of backspace processing;

FIGs. 5A and 5B show the structure of variable length string data structures;

FIG. 6 shows the text phase variable length data structure;

FIG. 7 is a hiearchial input output diagram of the store picture phase;

FIG. 8 is flow chart describing the store picture phase;

FIG. 9 schematically illustrates picture phase buffer handling;

FIG. 10 shows a detailed illustration of the picture phase information in a book file;

FIG. 11 shows the structure of a complete book file;

FIG. 12 shows an example of a display screen obtained using the present invention;

FIG. 13 is a hiearchial input output diagram of the display picture phase;

FIG. 14 is a flow chart describing the display picture phase;

FIG. 15 shows an example of a display screen having a window, obtained using the present invention.

## DESCRIPTION OF A PREFERRED EMBODIMENTS

The implementation of the invention is described in two phases:

. Creating an online book

. Reading an online book

In the description of the preferred embodiment frequent reference will be made to markup and Generalized Markup Language (GML). In general, and as used herein, markup is information added to a document that enables a person or a system to process it. In the IBM product known as SCRIPT, the markup consists of GML (generalized markup language) tags, control words, macros and symbols. GML is a language used to identify the elements of a source document without respect to specific formatting. IBM's product known as GML is an example of such a language, ISO standard SGML is another example.

All static processing is performed when the online books are created. Dynamic processing cannot be done until the book is displayed. An example of dynamic processing is deciding which colors to use to display highlighted text. This processing is dependent on the colors available on the display device used to display the book.

In order to provide a useful and accurate analog to a hardcopy book the present invention uses three elements of the source (i.e the marked-up, or word processor expression of the material) that are important to providing a rich book reading environment:

1. the fundamental hierarchical structure of the book (sections, subsections, paragraphs, etc.).

2. the information itself (text, as well as graphics and image pictures).

3. the author's presentation intention (high-lighting, indenting, spacing, etc.) .

An example of the marked up expression is the product of International Business Machines, Corp., GML (Generalized Mark Up Language) that allows a writer to insert :hp1.tags:ehp1. into the text. These tags serve as instructions used by a text formatting program that indicate how specified portions of text are to be presented on the printed page, for example, underlined, italicized, centered, etc.

In all cases, what is captured is in generic intention form. Rather than converting the GML source to a directly displayable or printable data stream, this invention converts it to an internal form of intent-based indicators and flags. An easy-to-program representation of the markup intention is stored.

In this way, the intents expressed in GML are preserved in a more programmable form after all the basic text processing functions of the text formatter are completed. Said another way, the author organized the book in the way he thought useful. This invention captures and takes advantage of that organization (structure, presentation intent, and information) to provide useful ways for readers to navigate through the material.

The book display program, given the two-dimensional nature of the display screen, uses the structural information preserved in the book file to provide convenient forms of navigation that are metaphorically related to the (three-dimensional) methods of navigation in printed books, (i.e., page turning, table-of-contents based navigation, subject headings, etc). It also allows for other metaphoric actions on the online information, such as adding personal annotations similar to margin notes on a printed page.

## CREATING AN ONLINE BOOK

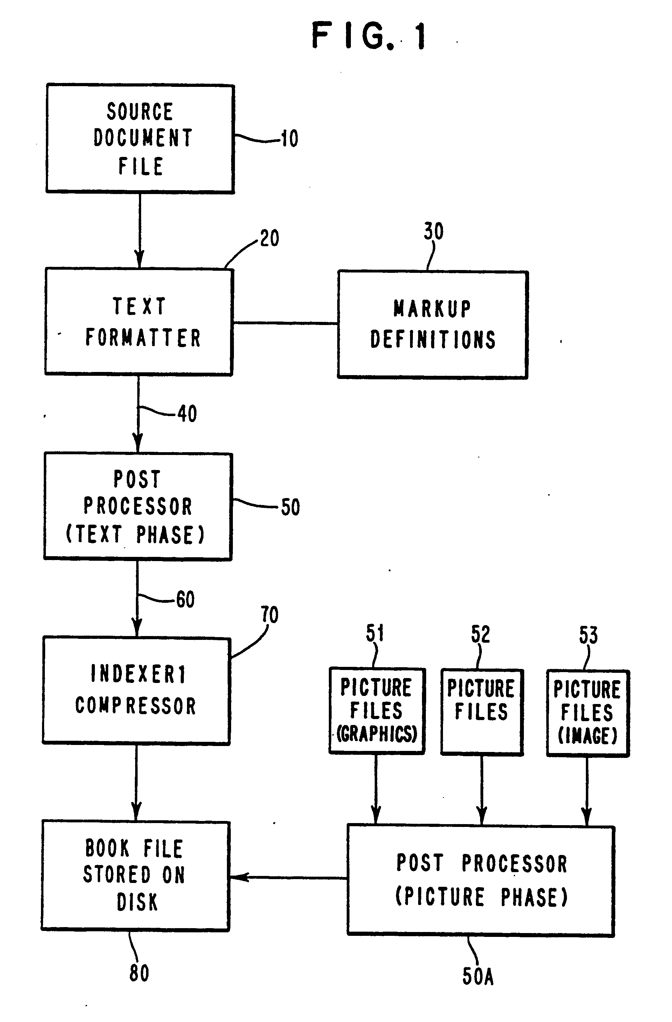

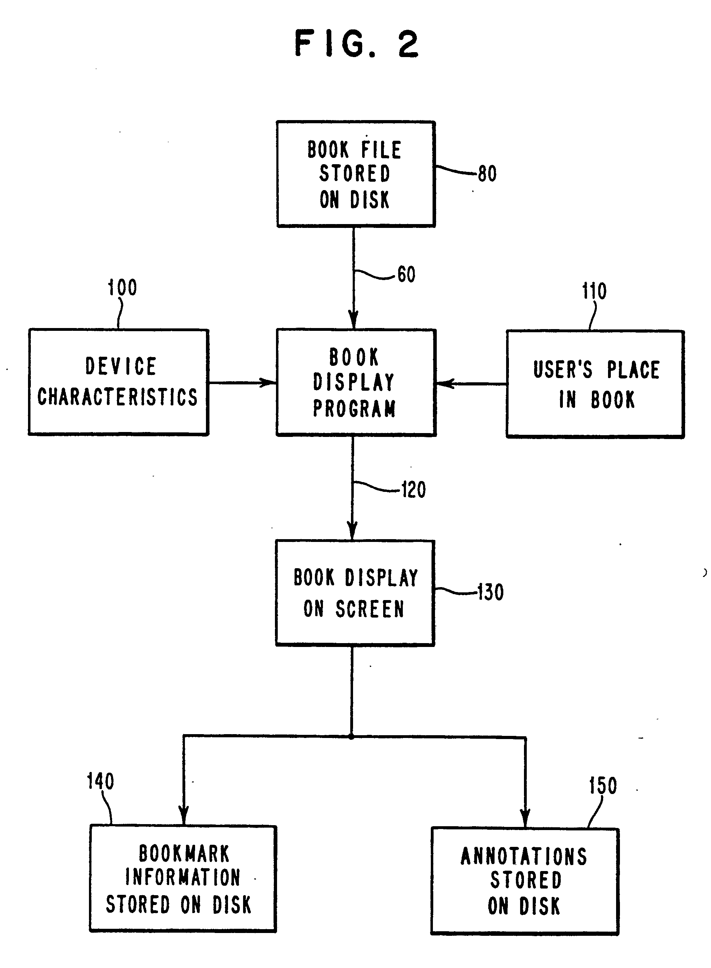

The following description includes reference keys (in parentheses) to FIG. 1 and FIG. 2.

Refer now to FIG. 1 in which the book building phase of the present invention is shown. The source document file containing the source material 10 is the same source file used to create a printed document.

Text formatter 20 reads the source material 10 and uses the markup definitions 30, as further described below to generate the formatted test stream 40. Text formatter 30 is a formatter such as IBM's Document Composition Facility (DCF), or any program that performs the same processing. Invocation of the book building phase includes a capability to specify the name of the program to be invoked here. The scope of this invention is not limited to IBM's implementation of a text formatter. Any text formatter that accepts any kind of markup language could be used.

Markup definitions 30 for online books contain descriptions, in the language of the text formatter, for how some processing differs for an online book. This invention disclosure covers the adaptation of the markup definition mechanism to the specific definition required to produce online books, rather than printed books. Broad coverage of the markup languages allows most books to be created with little, if any, editing re-work.

The formatted text stream 40 generated from the text formatting step 20 is uniquely suited for use as the basis of the book data stream, described below.

Markers are placed in text stream 40 for later processing by post processor 50. Many of the capabilities externalized by the book display program are made possible by the information about book structure and presentation intention that is captured at this stage.

Post processor 50 has two phases that create the online book file. One phase processes text; the other processes pictures and other graphics. Post processor 50 performs several operations, including:

. Preserves information about the structure of the book, for navigation within the book under the book reading program. For example, does the book have front matter and back matter? Where is the table of contents?

. Preserves data about the intent of various forms of GML markup. This makes it possible for the book display program to map the markup to the specific capabilities of individual display devices.

. Includes graphic pictures in the book.

. Incorporates any ancillary files required by graphics pictures (such as symbol sets).

. Includes scanned image pictures in the book.

The current implementation of the invention could be extended to include digitized voice or other audio segments, digitized video segments, and digitized animation sequences.

Post processor 50 receives the formatted text data stream 40 and converts it to book data stream 60. Book data stream 60 is not bound to a specific display device type until the moment of display and, as will be described hereinbelow, is uniquely suited to the demands of displaying online information.

Post processor 50 inserts special control codes in book data stream 60 that identify the structural elements of a book (topics, table of contents, index entries, figure list) and preserve the intentional aspects of text highlighting, rather than merely the representational aspects.

The Indexer/Compressor 70, an example of which is described in copending application serial number XXX,XXX, " Method for Use of Morphological Information to Cross Reference Keywords Used for Information Retrieval," and assigned to the assignee of the present invention, converts the book into as small a file as possible. It also creates indexing and linguistic information, so that the online book may be searched in a variety of ways. The compression of the book into a small file is not absolutely necessary to the purposes of this invention. Compression is a function known to be required by potential users of this invention, due to the storage requirements of large numbers of online books. If a compressor is used at this stage, then the book display program must have available a program with complementary function; that is, a decompression program that will decompress the individual records of the book when they are needed.

The book file created is stored on disk at step 80. Metaphorically, this is equivalent to a printed copy of a book that has been made available on a lending-library shelf. It may be read or used any number of times by any number of people.

Post processor 50 in its second or picture phase 50A incorporates Picture file 51 and 53, and symbol files 52 into the book file 80 that is stored on a disk or other non-volatile storage device.

FIG. 2 schematically illustrates the process for displaying a book from the stored book file 80. The book display program is used to display the book file on a display device of the end-user's choosing.

Book display program 90 is later used to display the book file 80 on a display device of the end-user's choosing. The book display program 90 recognizes the book data stream 60 and converts it to a usable on-screen display of a book 130. At that time, all text highlighting controls are interpreted so as to capitalize on the characteristics of the display 100, producing brightening, color changes, or underscoring as appropriate. The book display program 90 uses information embedded in the book about its structure and organization together with other intention information gleaned from the markup. The book display program 90 formats the book for the reader, a screen at a time. Also, as discussed further below book display program 90 also takes into account information about the user's place in the book 110, when generating a screen for display.

The book display program understands structural elements of books and so is capable of producing an effect similar to page-by-page reading. It can respond to a rich set of commands designed to accommodate the requirements of readers of books, such as-- show the table of contents, show the index, go directly to topic x. The book display program provides a variety of linguistically-based searching functions and also can allow direct on-screen annotation similar to margin notes in a hard copy book 150. These annotations are stored separately from the book file.

The book display program also provides for several kinds of place saving and context interrogation, as well as the ability to close the book and leave a bookmark 140.

Two concepts are central to the present invention, namely, that of a topic and a technique for capturing information in the source document, called control sequences.

Just as a printed book uses a page number as its unit of reference, an online book uses a topic. A topic consists of a GML heading tag and the information that follows it, up to the next heading.

The invention doesn't use page numbers because the sizes of display screens vary widely (24 lines to 60 lines or more). Page 27 on one display might be page 12 on another, so a unit of reference is used that is consistent on all displays.

Online topics are used like printed pages. The table of contents of an online book lists the headings with their topic identifiers, just as they are listed with page numbers in a printed book.

A topic identifier is usually a number (such as 1.2), but occasionally it is a word (INDEX, for example). Generally, front and back matter tags (such as :PREFACE and :INDEX) are given words to identify them, and tags in the body are given numbers, like heading numbers in print. A topic identifier is shown wherever a page number is shown in print.

A book may use a reference tag, like this one:
See : Heading id "furinfo" unknown -- for more details.

When the book is printed, the page number and text for the heading named "furinfo" are inserted, like so:
See "Further Information" on page 37 for more details.

From the same markup, the invention produces a topic reference instead of a page reference, like this:
See "Further Information" in topic 5.0 for more details.

Topics are created by headings tags (:H1--:H6). Normally, :H1 through :H4 create topics, while others do not but instead are treated as part of the information of the topic they're in.

A topic can have subtopics; this happens when it is followed by headings at the next level. For example, a book with three :H2 tags after its first :H1 tag gets its :H1 heading numbered 1.0 and its :H2 headings numbered 1.1, 1.2, and 1.3 -- they are subtopics of 1.0. When the online book is displayed, these subtopics are shown in a topic list at the end of the information in topic 1.0, like so:

    1.1 The First Head 2
    1.2 The Second Head 2
    1.3 The Third Head 2

When a topic identifier is assigned, it's usually the same number as the heading number assigned in print, although the current implementation has a few exceptions.

A TOPICID attribute is also provided to permit the author to manually assign topic numbers when necessary or desirable.

The aforementioned control sequence is the name of the technique invented to capture information from GML source file 10 and store it in book data stream 60 for later use by the book display program 90.

Control sequences are generated by the Markup definitions 30. They detect the usage of a tag, DCF control word, or other information in the GML source document 10 and record that usage in the formatted text stream 40. The Post processor 50 converts control sequences into control records in the book data stream 60. These control records are processed dynamically by the book display program 90.

For example, there is a DCF control word called .PA (Page Eject) that causes text to be placed on a new page. Since the book display program 90 must dynami cally format the book for display devices of different sizes, the only way to perform a page eject is to mark the place in the text where the page eject should occur, so that the book display program 90 can format the subsequent text on a new screen. The spot is marked using a control sequence.

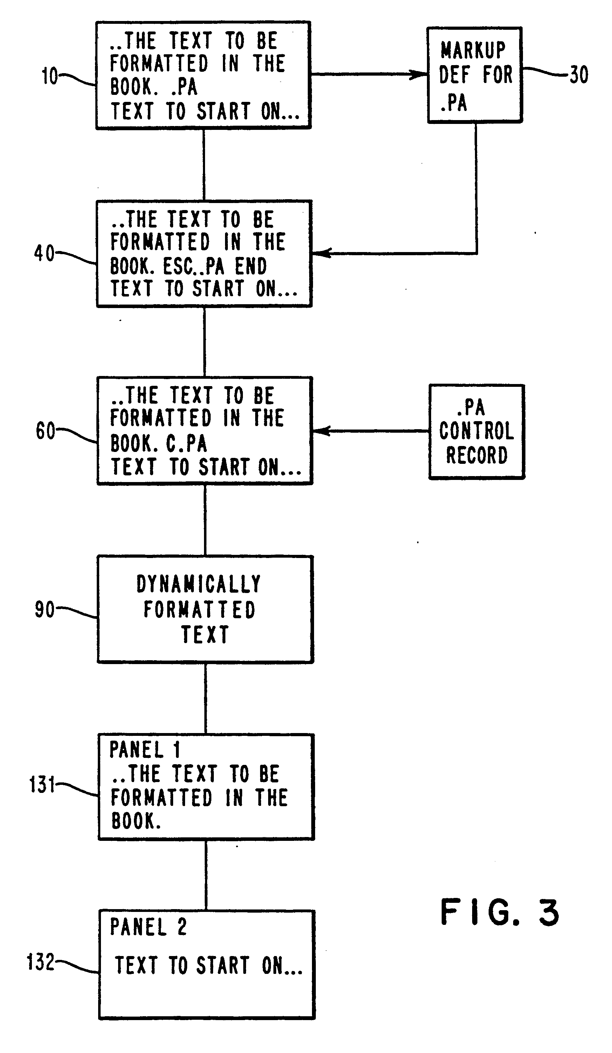

FIG. 3 graphically illustrates how the process works. The source file 10, in this instance contains the .PA control word. The markup definition 30 for the DCF .PA control word captures the string ".PA" in a control sequence in the formatted text stream 40 generated by text formatter 20. The text formatter inserts the codes ESC and END around the .PA control word. The Post processor 50 converts the .PA control sequence into the .PA control record in the book data stream 60, so that the presence of the control word for .PA is now indicated by C.PA. When the online book is displayed by the book display program 90, panels 1 and 2 (131 and 132, respectively) are generated, such that the control record for .PA is used to determine that subsequent information starts on a new screen.

Each control sequence starts with an escape sequence, a series of characters that won't occur in ordinary text. Next, the control sequence contains the information to be captured. Finally, another escape sequence signifies the end of the control sequence. Here's how a control sequence might appear for the DCF control word that skips a space before the next text line (.SK 1):

ESC.sk 1END

In the example, the characters "ESC" represent the starting escape sequence, and "END" represent the ending escape sequence. These escape sequences are actually implemented as strings of unusual unprintable characters.

Control sequences are inserted into the formatted text stream 40 using the string form of the DCF .OC control word. This technique ensures that the formatting of regular text output is not affected when the control sequences are removed by the Post processor 50.

The creation of an online book is now described. The online books are created from files marked up with GML, but as discussed above any program, such as a word processor, that inserts formatting tags into the text could be used to create the source, although appropriate changes in subsequent processing will be required.

The text in the online book is created in the same manner as text is created for printed books. The current implementation of the invention uses Generalized Markup Language (GML) source files, but the implementation can be extended to other word processing source files. A sample source file is shown in Example 1.

Authors who have existing GML source files can put them online with little or no changes, using this invention. If changes are made, they are made for one of two reasons:

    1. To avoid a restriction of the current implementation of the invention.

    2. To enhance the online information using techniques unavailable in print.

There are not many restrictions that require changes to the author's source files, but here are the common ones:

    1. markup that assumes page layouts (such as a grid--:GRID).

    2. markup that assumes page numbers (such as a manually constructed table of contents--:TOC).

    3. tables too wide for a display screen (:TABLE).

These restrictions are part of the preferred embodiment, although they could be removed by appropriate changes to the embodiment.

The second type of change, enhancing information with new online techniques, is optional. An author makes one of these changes only if he desires to:

. Override the normal treatment of a heading tag. The author can use a new tag attribute, called TOPICSEL, to cause a heading to create an online topic that normally would not. The attribute can also suppress creation of a topic for a tag that otherwise would create a topic.

. Select the topic identifier assigned to the topic for a heading tag. A new tag attribute, called TOPICID, allows the author to perform this function.

Generally, source files used for printed information are used without change with this invention.

The Text formatter 20 used in the preferred embodiment of this invention, IBM's Document Composition Facility (DCF), processes GML markup using Markup definitions 30. These definitions already exist to process markup for printing. This invention modifies these existing definitions to produce online information. The definition that controls all processing is called the profile. The other definitions are stored in macro libraries and are categorized according to the type of changes made.

Applications that use DCF as a text formatter often use a DCF profile, which is a file processed by DCF before the document itself is formatted. A profile can contain frequently used symbol and macro definitions, GML processing functions, and controls for the formatting environment. For more information on how DCF uses profiles, or on how applications can use profiles with DCF, refer to the IBM publication Document Composition Facility: Text Programmer's Guide (SH35-0069).

The invention uses a new profile that creates the formatting environment and defines all of the other markup definitions--definitions that are changed for online information, and those that are unchanged from print.

The formatting environment for online display is quite different from a printing environment. In the preferred embodiment of the invention, the DCF page length is set to 3000, so that all topics fit on a single DCF page. The best solution would be to use an infinite page length, but this is not currently supported by DCF, although other products may support an infinite page length.

The preferred embodiment of the invention sets the DCF line length (the width of the text) to 74. The embodiment could be changed so that the text is not formatted to a specific length, so that it can be reflowed dynamically inside display windows of varying sizes.

The preferred embodiment uses an IBM 2741 terminal as its DCF output device. This device was chosen for several reasons:

. The 2741 can use DCF's overstrike capability to support a large number of fonts (typestyles). The profile defines each font used in markup definitions with a unique overstrike character. Later, the Post processor 50 converts those overstrike sequences found in the formatted text stream 40 into font control records in the book data stream 60. Some examples of the fonts defined are shown in TABLE 1. The FONTDEF record is described further below.

. The 2741 supports most of the same features as the 3270 terminal, which is the eventual output device for the preferred embodiment of the invention. It will be clear to those skilled in the art that the invention could also be used in an intelligent workstation environment by using an all-points-addressable DCF output device (using a PostScript data stream, for example) instead of a 2741.

TABLE 1

| Kind of Text | Character | FONTDEF Identifier |
|---|---|---|
| :CAUTION | B | CAUTION |

8

| | | |
|---|---|---|
| :CAUTION text | F | CAUTIONTEXT |
| :CIT | C | CIT |
| :DANGER | D | DANGER |
| :DANGER text | O | DANGERTEXT |
| :HP1 | 1 | HP1 |
| :HP2 | 2 | HP2 |
| :HP3 | 3 | HP3 |
| :HP4 | 4 | HP4 |
| :HP5 | 5 | HP5 |
| :HP6 | 6 | HP6 |
| :HP7 | 7 | HP7 |
| :HP8 | 8 | HP8 |
| :HP9 | 9 | HP9 |
| :H0 | 0 | H0 |
| :H1 | H | H1 |
| :H2 | I | H2 |
| :H3 | J | H3 |
| :H4 | K | H4 |
| :H5 | L | H5 |
| :H6 | M | H6 |
| :PK | P | PK |
| :PK with DEF attribute | Q | PKDEF |
| :PV | V | PV |
| :PV with DEF attribute | Z | PVDEF |
| :RK | R | RK |
| :TP | T | TP |
| :WARNING | W | WARNING |
| :WARNING text | G | WARNINGTEXT |
| :XMP | E | XMP |
| :XPH | X | XPH |
| underscoring | - | UNDERSCORE |

The profile also defines the processing that markup should undergo. This processing is included in Markup definitions 30. While some markup definitions for printed output did not need to be modified, many others had to be changed for the invention. Some examples of the modified definitions are described further below. A profile should include definitions for all markup in the markup language. The preferred embodiment of the invention supports IBM's Starter Set GML (part of IBM's DCF product) and IBM's BookMaster GML (a separate IBM product), but the implementation can be extended to any markup language or word processor. (For more information on Starter Set GML, refer to the IBM publication Document Composition Facility: Generalized Markup Language Starter Set Reference (SH20-9187). See the IBM publication called IBM Publishing Systems BookMaster User's Guide (SC34-5009) for more information on the BookMaster markup language.)

Applications that use DCF as a text formatter often use macro libraries, i.e. files that contain DCF macros used to format the source document. A macro library can contain frequently used symbol and macro definitions. The macros can be used to override DCF control words and to process GML markup. For more information on how DCF uses macro libraries, or on how applications can use macro libraries with DCF, refer to the IBM manual Document Composition Facility: Text Programmer's Guide (SH35-0069).

All Markup definitions 30 invoke DCF control words to accomplish their processing. Some of these control words are intercepted by macros (stored in the invention's macro library) that change the behavior of these control words. In the present invention, control is changed according to the functions, described herein, needed to accomplish an online book metaphor.

Any Markup definition 30 that uses a DCF control word listed in TABLE 2 will invoke a macro instead of the control word.

TABLE 2

| Macro Name | Description |
| --- | --- |
| CP | Insert .CP control sequence |
| DR | Force usage of 3270 API. characters for all rules |
| H0 | Create a topic |
| H1 | Create a topic |
| H2 | Create a topic |
| H3 | Create a topic |
| H4 | Create a topic |
| H5 | Create a topic |
| H6 | Create a topic |
| IE | Format index entry record |
| IX | Format index and insert INDEX control sequence |
| PA | Insert .PA control sequence |
| PI | Replace page number with topic identifier |
| RF | Suppress all footers |
| RH | Suppress all headers |
| SI | Generate PICTURE instructions, store picture name, and insert PIC control sequence |
| SK | Insert .SK control sequence |
| TC | Format table of contents and insert TOC control sequence |

The following describes generally, examples of some of the modified definitions, which may be invoked by the usage of macros. In the description that follows, the modified markup definitions are listed and described by category.

1. MARKUP THAT CREATES A TOPIC;

Many Markup definitions 30 have been modified to create topics. Some of the tags that can create topics are:

    a. Headings (:H0--6)
    b. Front matter headings (:PREFACE, :TOC, :ABSTRACT, etc.)
    c. Other front matter sections that don't create printed headings (:TITLEP, :SYNOPSIS, :NOTICES, etc.)

    d. Back matter headings (:INDEX, :BIBLIOG, :GLOSSARY, etc.)

    e. Message numbers (:MSGNO)

Topics are created by inserting control sequences that capture:

    a. The name of the tag (HDLEVEL)

    b. The topic identifier of the topic (TOPIC)

    c. The name of the SCRIPT source file (SOURCEFN)

These control sequences are processed by the Post processor 50 into topic control records.

## 2. MARKUP THAT REFERS TO TOPICS:

Some Markup definitions 30 have been modified to refer to topic identifiers instead of page numbers (as they do in print). Some of the tags that refer to topic identifiers are:

    a. References to headings (:HDREF).

    b. References to figures (:FIGREF).

    c. Table of Contents (:TOC).

    d. Figure List (:FIGLIST).

The markup definitions for these tags have been modified so that the topic identifier is produced instead of the page number that would be generated for the printed document.

The above will be more fully understood by reference to the following example. A book may use a reference tag, like this one:

See -- Heading id "furinfo" unknown -- for more details.

When the book is printed, DCF inserts the page number and text for the heading named "furinfo" like so:

See "Further Information" on page 34 for more details.

From the same markup, the present invention produces a topic reference instead of a page reference, like this:

See "Further Information" in topic 5.0 for more details.

## 3. MARKUP THAT CREATES INDEXES:

Some Markup definitions 30 have been modified to create online subject indexes in the back of an online book. Some of the tags that produce an index are:

    a. Index (:INDEX).

    b. Index entry (:I1--3).

    c. Index heading (:IH1--3).

The markup definitions for these tags have been modified so that:

    a. the content of index entries are captured in PI control sequences processed by the Post Processor 50 into search index control records in the book data stream 60.

    b. topic identifiers are substituted for page numbers in the index.

    c. the index can be dynamically formatted into two columns when displayed.

## 4. MARKUP THAT DESCRIBES THE ENTIRE DOCUMENT:

Some Markup definitions 30 have been modified to save information about the entire document. Some of the tags that supply this information are:

    a. Title page information--document title, author name, etc. (:TITLEP).

    b. Security level and copyright notice (:GDOC, :USERDOC, etc.).

    c. Leader dots in lists (:DOCPROF).

This information is copied by the Post processor 50 into header control records in the book data stream 60.

## 5. MARKUP WITH MODIFIED FORMATTING:

Some Markup definitions 30 were modified so that they produce better results online. Since the formatting environment in the implementation of this invention is so different from a print formatting environment, some definitions required some fine tuning.

Some examples of tags whose definitions were changed for formatting reasons are:

a. Change spacing on cover page (:COVER).

b. Use 3270 hexadecimal codes for character graphics (:CGRAPHIC).

c. Suppress multipart figure captions (:FIGCAP).

It will be understood by those skilled in the art that other formatting languages, and or word processors may require different modifications.

The formatted text stream 40 produced by the text formatter 20 using the Markup definitions 30 is converted to the book data stream 60 by the first phase of the post processor 50. A second phase of the Post processor 50 also includes graphics and image pictures in the book file 80 and includes uncompressed security and copyright notices.

The first phase of the post processor 50 converts the text into a record-oriented file that is suitable for the Indexer/Compressor 70 called the book data stream 60. This design allows other word processing formats (besides DCF-based GML) to be used with the invention. Any word processor file can be processed to the book data stream 60 described here. The preferred embodiment converts a DCF GML source file.

In the preferred embodiment the Post processor 50 takes two passes over the formatted text stream 40. The Post processor 50 performs three main functions in the first pass:

1. Processes

Header Control Records are created directly by the profile of the Markup definitions 30. Most of these records are written directly into the book data stream 60 file by the Post processor 50, and are described further below. Some records are used directly by the Post processor 50, however, and descriptions of which, follow:

STARTCTL: the three characters that signify the start of a control sequence.

ENDCTL: the three characters that signify the end of a control sequence.

BACKSPACE: the character used as a backspace character by text formatter 20.

2. Detects the topic structure.

During the first pass, the Post processor 50 detects the structure of the topic containing the list of all topics and their subtopics. During the second pass, this information is used to create the menu and topic control records.

3. Creates topic summary control records.

During the first pass, the Post processor 50 creates topic summary control records. These records "summarize" the formatting control records and text lines in the topic. The records are written to a temporary file during the first pass, and read back in during the second pass.

The Post processor 50 performs several other functions in the second pass:

1. Processes control sequences.

There are several control sequences that are processed by the Post processor 50:

FORMATTING: Formatting control sequences are processed into formatting control records in the interchange file. These include PIC (picture prompt) and several DCF control words (.CP, .PA, .SK, and .SP).

INDEX: There are two index control sequences 1) INDEX, which signifies the start of the index, and 2) PI, which indicates in the text an index entry to be referred to in the index.

CONTENTS: The TOC control sequence indicates that the table of contents control records (stored in a separate file by the .TC markup definition) should be inserted at that point.

TOPIC: There are three topic control sequences which always appear together at the start of a new topic:

a. HDLEVEL contains the tag or control word that created this topic. The HDLEVEL topic control record is created from this control sequence.

b. SOURCEFN contains the filename of the SCRIPT source file that created this topic. The SOURCEFN topic control record is created from this control sequence.

c. TOPIC indicates that a topic starts at this point. If menu control records need to be generated for the previous topic, they are produced. Then, the topic control records for this topic are produced from the topic structure information gathered during the first pass.

A diagram showing an example of control sequence processing was previously described with respect to FIG. 3.

2. Processes backspace characters.

After all control sequences have been removed and processed, a record is processed for backspace characters. Backspace characters are used in the present invention to determine the font with which a character is to be displayed.

If text is overstruck by characters defined as font changes, then FONT control records are produced. If not, the text is repositioned according to the number of backspaces and the backspaces are removed.

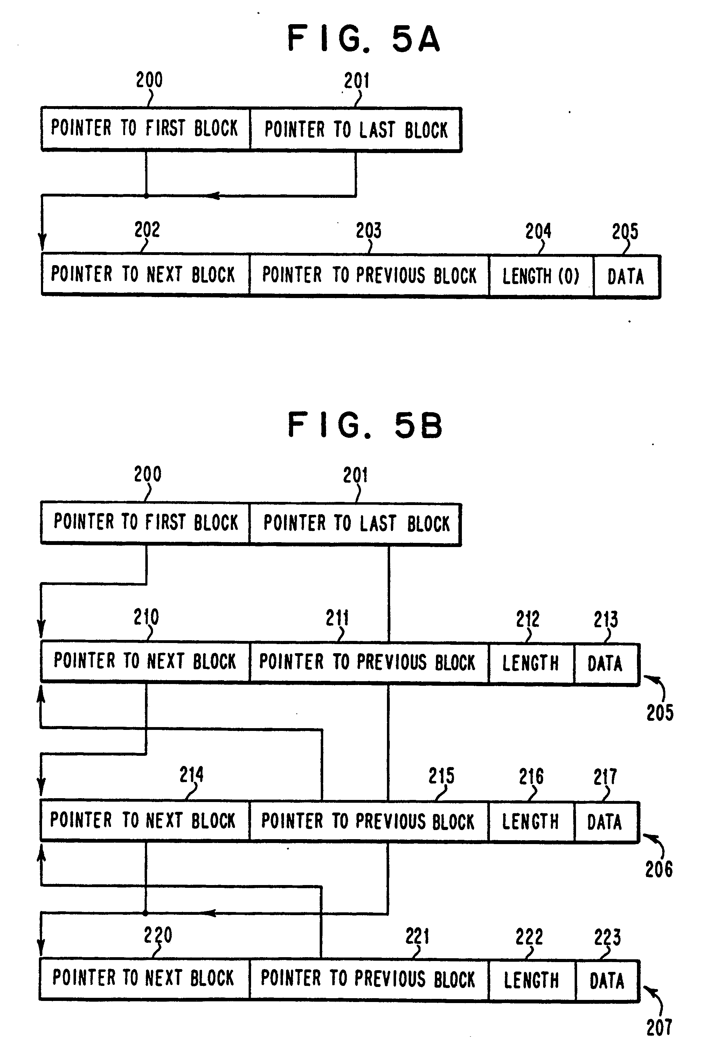

Refer now to FIG. 5 which showsa diagram of backspace processing. In the example described, the source file contains the phrase "book file: surrounded by :hp1. and :ehp1.. These tags delimit a word to be highlighted, somehow, ordinarily underlined in a printed document. The markup definition 30 in this instance, contains the markup definition for &gml.hp1. which causes use of of font HI1 for text defined in the markup definitions 30 to be overstruck by a "1". Thus the formatted data stream at 40 contains the phrase "book////1111 file////". The post processor 50 changes the backspace characters "/" into the appropriate codes in book data stream 60. Thus the control codes CFONT 1 4 1 and CFONT 6 4 1 are inserted prior to the words "book file" in book data stream 60, (FONT control records are further described below), where the first arguments after the FONT control record (1 and 6) indicate the start column, the second arguments (4 and 4) indicate the length, and the third argument (1 and 1) indicate the font to be displayed. The result, shown at 135 includes the phrase "book file" underlined on the display.

3. Processes text.

Text Records: After all control sequences and backspaces have been processed, what remains in the input record is the normal text that would otherwise have been printed. A text record is produced from this remaining text.

One of the more complicated functions of the Post processor 50 is its handling of variable length strings. Variable length strings are groups of data of different lengths. Variable length strings are important to the present invention because they permit the present invention to build up information about different items. For example, the summary control records are constructed from various items, and the total size of the record is not known beforehand. It is therefore important to be able to handle variable length strings in this, and other instances. Both the formatted text stream 40 and the book data stream 60 contain variable length records.

The strings are held in a data structure called VARI which is shown in FIGs. 5A and 5B. FIG. 5A shows a one-block string, or the structure of the string upon initialization. The string structure a pointer to the first block 200 and a pointer to the last block 201. Both 200 and 201 point the beginning address of the pointer to the next block. The string structure also contains a pointer to the previous block 203, which in the case of a one block string does not point any where. The length of such a string 204 is 0. The data in the string is indicated at 205.

FIG. 5B shows the structure of a string having three 4096-byte blocks 205, 206 and 207. Once again, the string structure includes a pointer 200 to the first block and a pointer 201 to the last block of the string. The pointer to the first block points to the beginning address of 210 in block 205 which in turn points to the starting address of block 206 containing pointer 214, which in turn points to the start of the address of block 207 containing pointer 220. Pointer to last block 201 also points to the starting address of block 207, since this would be the last block. Also, each block contains a pointer to the previous block. Pointer 211 does not point to a previous block, because the block it is contained in, 205 is the first block. Pointer 215 points to block 205 as the previous block, and pointer 221 points block 206 as its previous block. Each block also contains information as to its length (212, 216 and 222) and of course, the data it holds (213, 217, and 223).

In the present invention subroutines perform variable length string handling functions of the following types:

1. Add data to the end of a string (chaining a new block if necessary).
2. Initialize pointers and the first block of a string.
3. Clear the blocks containing a string by setting the length counters to zero.
4. Concatenate two strings to create a third string.
5. Release the storage acquired to hold a string.
6. Return a portion of a string (substring).
7. Return the length of a string.

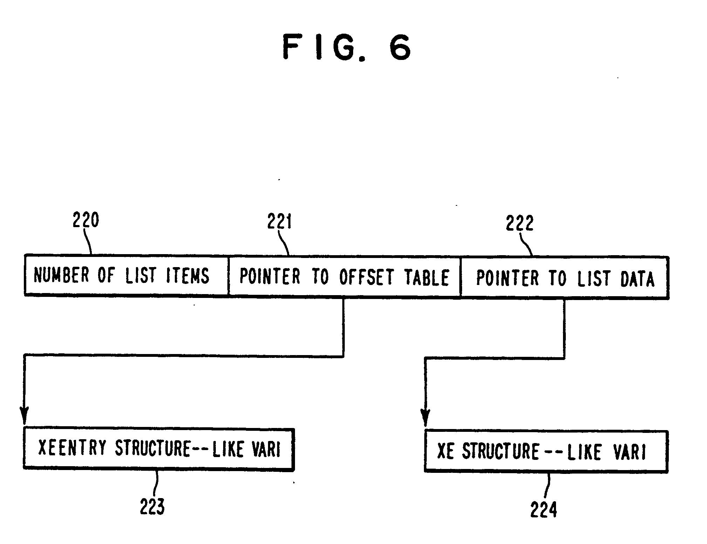

Some of the functions of the Post processor 50, such as detecting topic structure, requires the processing of lists of variable sizes, called variable length list handling. The lists are held in data structures called XE (for the data) and XEENTRY (for the offset into the data). The list items themselves are each variable length strings as previously explained. A diagram of the list data structure is shown in FIG. 6. The structure includes number of list items 220, the pointer to the offset table 221 and the pointer to the list data 222. Pointer 221 points to 223, the XEENTRY structure which in turn contains a pointer to the data in in 224.

Subroutines perform variable length list handling functions:

1. Add an index entry and list item.
2. Return a list item.

The second phase of the Post processor 50:

1. Stores the copyright and security notices from the :GDOC or :USERDOC in the book file 80 (so they can be seen when the book file is browsed).
2. Includes graphics and image pictures in the book file 80.
3. Sets the number of 4K picture blocks in the book file 80.

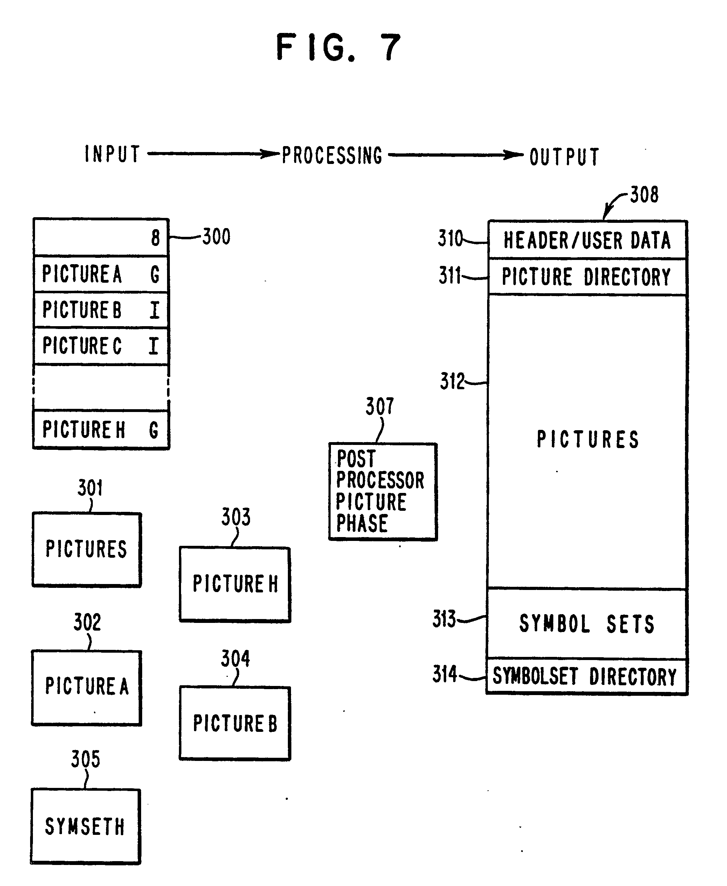

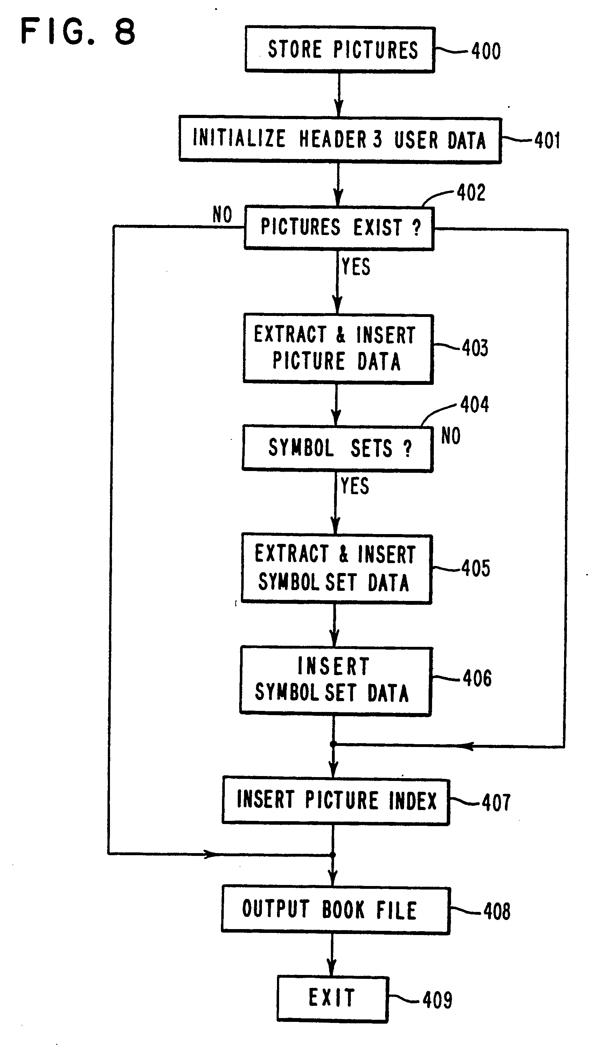

FIG. 7 is a Hierarchical Input Output (HIPO) diagram of the picture phase. A flowchart of the picture phase is depicted in FIG. 8. FIG. 7 shows processing that takes place in the picture phase. The names of the files PICTUREA, . . .PICTUREH are listed, the number of files to be processed, 8, being listed at top. Also as shown, there is a marker indicating if the individual file is a graphics (G) or image (I) file. Several of the files, themselves are shown at 301-304. SYMSETH 305 is a symbol set from which the graphics pictures may be constructed. The book file 308 is shown including various components, including the header/user data 310, picture directory 311, the pictures 312 themselves, the symbol sets 313 and the symbol set directory 314.

FIG. 8 is a flow chart illustrating the process used to assemble the picture phase information into the book file 308. The process begins at 400. At step 401 the header and user data is initialized (310). At step 402 it is determined if there are any pictures, and if not processing continues at 408 and the book file 308 is output at step 408, and then the procedure is exited. If, however, there are pictures, the picture data is extracted and inserted at step 403.

Next, at step 404, a determination is made as to whether or not there are symbol sets, if not processing continues at step 407 where the picture index 311 is inserted. If there are symbol sets, processing continues at step 405 where the symbol set data is extracted and inserted at 313, then the symbol set index 314 is inserted at step 406. Next Picture index 311 is inserted at step 407.

The graphics are included from ADMGDF files, the device-independent graphics format used by IBM's Graphical Data Display Manager (GDDM) product. Any symbol sets (GDDM ADMSYMBL files) required to display the graphics are included as well.

The images are included from ADMIMG files, the device-independent image format used by IBM's GDDM product. It will be understood by those of skill in the art that any standard graphics and image formats could be used instead.

The picture phase stores the security and copyright notices for the book in plain (uncompressed) text in the book file 80, so that it is readable if the file is browsed.

The names of the pictures are captured from the name used in the DCF .SI control word statement through the use of a macro defined in Markup definitions 30. The names are passed to the picture phase in a disk file. The picture phase reads this disk file whose first record contains the number of pictures in the book. A file could contain, for example, three pictures, BICYCLE, COMISKEY, and 1000001, where COMISKEY is an image and BICYCLE and 1000001 are graphics.

If there are no pictures, a one is stored in the first two bytes of the book file (the number of 4K picture blocks), a zero is stored as the number of pictures, and the file is padded to 4096 bytes.

If there are pictures, the picture phase stores the number of pictures, and reads the disk file that contains names of all the ADMGDF and ADMIMG files that are referenced in the book. A request is then made to GDDM to restore each named picture to the normal GDDM display space. The GDDM calls differ for image and graphics pictures. Using GDDM calls, the picture is retrieved from GDDM display space and placed into the book file output buffer.

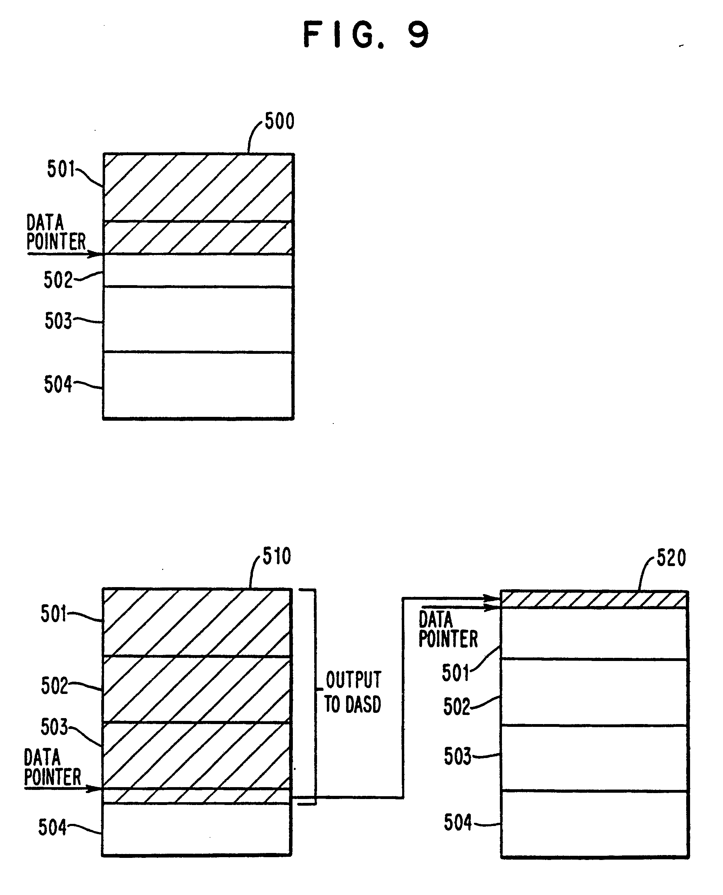

A particularly tricky aspect of the implementation is the buffer handling shown in FIG. 9. The output buffer is written to disk whenever less than 4096 bytes remain from the buffer size. Buffer size can be determined at runtime and depends on available storage. The name, length, and pointer location of the picture data is stored in a directory. Any symbol sets (ADMSYMBL files) that were loaded by GDDM while the pictures were restored are also indexed in a symbol set directory and the symbol sets themselves are stored in the book file. Three conditions are shown for the buffer. The first 500, having four 4096 byte blocks 501-504. As more information is added to the buffer at 510, there reaches a point when less than 4096 bytes remain in block 504. At this point the data shown as 505 is moved into the top of the buffer as shown by 520, and the data in blocks 501, 502 and 503 is transferred to disk.

After all pictures and symbol sets have been stored, the file is padded to the nearest 4K boundary, and the number of 4K picture blocks is stored in the first two bytes of the book file.

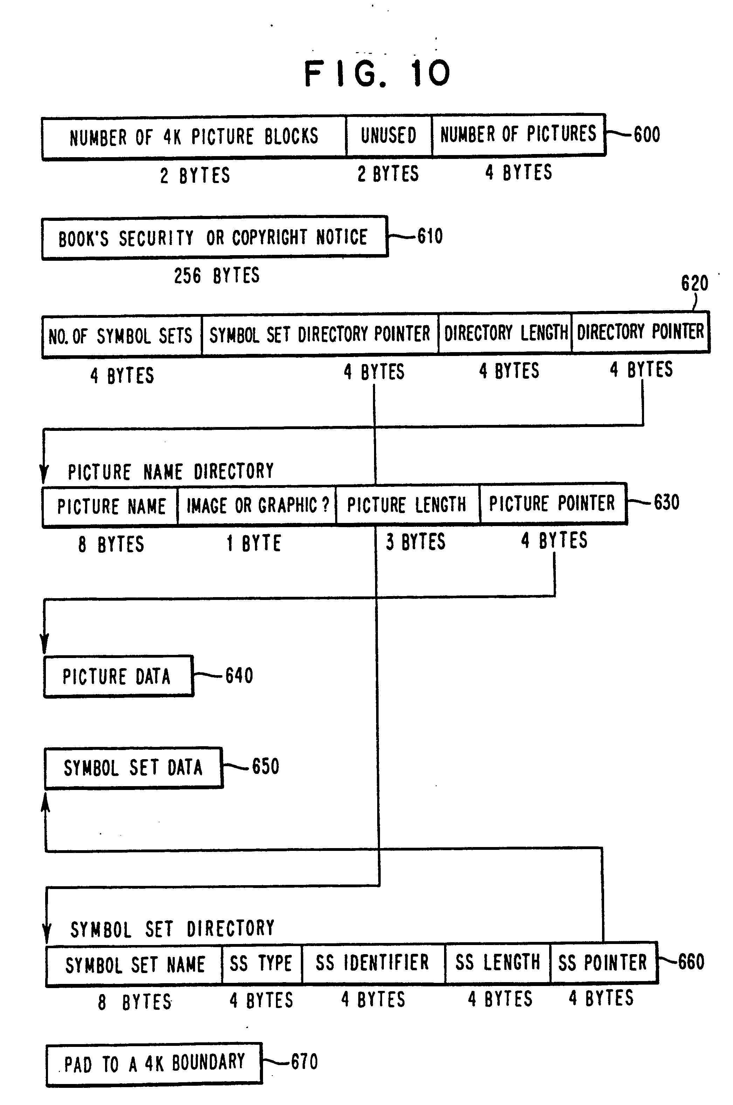

FIG. 10 shows the structure of book file 308 when the picture phase ends. Blocks 600 and 620 contain header data 310 in uncompressed form, and block 610 contains user data 310 also in uncompressed form. Block 630 contains the picture directory data 311 including picture name, whether it is an image or graphics, its length and a pointer. The pointer points to picture data 640 corresponding 312 in FIG. 7. The symbol set directory 660 corresponds to symbol set directory 314 and includes the symbol set name, the symbol set type, the symbol set identifier, the symbol set length and the symbol set pointer. The symbol set pointer points to the symbol set data 650 corresponding to 313 in FIG. 7. Finally, block 670 is used to pad out the file to a 4096 byte boundary, if needed.

For more information on the formats of ADMGDF, ADMSYMBL, and ADMIMG files, refer to the IBM publication Graphical Data Display Manager: Base Programming Reference (SC33-0332).

The book data stream 60 has a variable record format with a maximum logical record length of 255.

The record type of each book data stream 60 record is in column one. The various record types are shown in TABLE 3.

TABLE 3

| Type of Record | Columns | Field | Sample Data |
|---|---|---|---|
| Text | 1 | Record Type | '40'x |
| | 2-255 | Text | A sentence... |
| Search | 1 | Record Type | S |
| | 2 | Search Type | H |
| | 3-255 | Text | 1.2.1 |
| Control | 1 | Record Type | C |
| | 2-255 | Control Data | .SK 5 |
| Language | 1 | Record Type | L |
| | 2-255 | Language Name | ENGLISH |

There are four types of records in the book data stream 60:

1. Text records contain the plain text of the book. They are used to display the text by the book display program 90.

Text records have a blank in their record type field (column one). Phrases can span multiple text records, but words do not span records (i.e., no words are hyphenated).

2. Search records contain text that is not part of the plain text of the book (e.g., headings, index entries, etc.). They are used to create search indexed text by the Indexer/Compressor 70.

Search records have an "S" in their record type field (column one). Neither phrases nor words span multiple search records. Search records are described in more detail below.

3. Control records contain data that is used to format and display the book.

Control records have a "C" in their record type field (column one). Control records are described in more detail below.

4. Language records contain the dictionary name that is used by the Indexer/Compressor 70 to compress and index the book.

There is only one language record in each book data stream 60, and it is the first record in the file.

Language records have an "L" in their record type field (column one). The preferred embodiment of the invention supports only ENGLISH as a language name, but it can be extended to support any language supported by the Indexer/Compressor 70.

A sample book data stream 60 is shown in Example 2.

All search records have a search record type in column two. (There is always an "S" in column one.) The various search record types are shown in TABLE 4.

TABLE 4

| Type of Record | Columns | Field | Sample Data |
|---|---|---|---|
| Search | 1 | Record Type | S |
| Heading | 2 | Search Type | T |
| Text | 3-255 | Text | Overview |
| Search | 1 | Record Type | S |
| Heading | 2 | Search Type | H |
| Identifier | 3-255 | Text | 1.2.1 |
| Search | 1 | Record Type | S |
| Index | 2 | Search Type | I |
| | 3-255 | Text | animals.cats |

There are three types of search records:

1. Search heading text records contain data that is indexed by the Indexer/Compressor 70 as topic title text.

Search heading text records have a "T" in their search record type field (column two).

2. Search heading identifier records contain data that is indexed by the Indexer/Compressor 70 as topic identifiers.

Search heading identifier records have an "H" in their search record type field (column two).

3. Search index records contain data that is indexed by the Indexer/Compressor 70 as index entry text (text that appears in the Index of a printed book). Search index records have an "I" in their search record type field (column two).

Words and phrases never span search records.

There are several types of control records including header, topic, formatting, menu, contents, and index control records described in greater detail hereinbelow.

1. header control records precede the first topic in the online book. The header control records are generated directly by the Markup definitions 30 profile in a separate output file. The Post processor 50 places this separate file at the beginning of the book data stream 60.

Header control records always have a "C" in column one and are found in the header of the online book file. The format of all header control records is:

Ccontroltype = [controldata]

Unless otherwise specified, each of these records can occur just once within the book header.

Here are some examples of header control records:

AUTHOR = [bookauthor]

An author of the book, taken from an :AUTHOR tag. If there is no :AUTHOR tag, then no data follows the equal sign. If there are multiple :AUTHOR tags, then multiple AUTHOR control records are present.

This information is displayed in the card catalog function, described below.

COPYRIGHT = [copyright]

The copyright of the book, taken from the COPYR attribute of the :GDOC or :USERDOC tag. If there is no COPYR attribute, then no data follows the equal sign. This information is displayed on the title line of all panels of the book.

DATE = [bookdate]

The date of the book, taken from the :DATE tag. If there is no :DATE tag, then no data follows the equal sign. This information is displayed in the card catalog function, described below.

DOCNUM = [documentnumber]

The document number of the book, taken from the :DOCNUM tag. If there is no :DOCNUM tag, then no data follows the equal sign. This information is displayed in the card catalog function, described below.

FONTDEF = character type

A definition for a font within the book. There are multiple FONTDEFs in each online book, corresponding to the fonts defined with overstrike characters in the Markup definitions 30 profile. For a list of each valid character and type, see TABLE 1.

This information is used to determine how to display highlighted text denoted by the FONT topic control record. Each FONT control record uses a font defined by a FONTDEF control record and is described below in greater detail.

LDRDOTS = DOT | NODOT

The setting of leader dots for the table of contents. It is extracted from the LDRDOTS attribute of the :DOCPROF tag, if present.

DOT causes periods to separate the heading from its topic identifier when the table of contents is displayed. NODOT causes the heading and topic identifier to be placed next to each other.

SECURITY = [securityclass]

The security classification of the book, taken from the SEC attribute of the :GDOC or :USERDOC tag. If there is no SEC attribute, then no data follows the equal sign. This information is displayed on the title line of all panels of the book, unless there is a copyright (from the COPYRIGHT control record).

TITLE = [booktitle]

The full title of the book, taken from the :TITLE or :TLINE tags. If there are no :TITLE or :TLINE tags, then no data follows the equal sign. This information is displayed in the card catalog function, described under below.

TOPICS = number

The number of topics in this book. This information is used with the current topic's TOPIC# topic control record to display the results of the POSITION command, which lets readers see their current location in the book. The POSITION command is described further below.

VERSION = version

The release of the implementation that was used to create this book file 80. This information can be used to retain compatibility across releases for changes in book architecture.

2. topic control records occur within topics in the online book, between the SH and ST records in the topic. Topic control records always have a "C" in column one and are found in topics of the online book file. The format of all topic control records is:

Ccontroltype [controldata]

Unless otherwise specified, each of these records can occur only once in a topic, between the SH and ST records.

There are numerous types of topic control records. The following are the more important examples.

BACKLEVEL [topicid]

The topic identifier of the previous topic that is at the same level in the topic hierarchy as this topic. For example, if a book has a :H1 tag followed by three :H2 tags, followed by another :H1 tag, the topic created by the second :H1 tag contains a BACKLEVEL control record that lists the topic identifier of the topic created by the first :H1 tag. If there is no previous topic in the book at the same level, then no topic identifier is present.

This information is used by the BACK LEVEL command when the online book is displayed and will be described below in the description of "Turning Pages in a Book."

FORWARDLEVEL [topicid]

The topic identifier of the next topic that is at the same level in the topic hierarchy as this topic. For example, if a book has a :H1 tag followed by three :H2 tags, followed by another :H1 tag, the topic created by the first :H1 tag contains a FORWARDLEVEL control record that lists the topic identifier of the topic created by the second :H1 tag. If there is no subsequent topic in the book at the same level, then no topic identifier is present.

This information is used by the NEXT LEVEL command when the online book is displayed as is described below under the description of "Turning Pages in a Book."

17

PARENT [topicid]

The topic identifier of the topic that is one level higher in the topic hierarchy than this topic. For example, if a book has a :H1 tag followed by three :H2 tags, the topics created by the :H2 tags each contains PARENT records referring to the :H1's topic identifier. If there is no higher level topic in the book, then no topic identifier is present.

This information is used by the SECTION command described below and the QUERY CONTEXT command, also described below, when the online book is displayed.

SUMMARY summarydata

A summary of the formatting characteristics of the lines in the topic. The SUMMARY record contains a list of the control records found in the topic that affect spacing (like .SK and .SP) and a list of the text records found.

The formatting control records are listed just as they appear later in the topic, while text records are identified by a "T" followed by the number of consecutive text records that occur. Each control record or text record count is separated by a pound sign (#). There can be multiple SUMMARY records in a topic, but they must occur consecutively.

When the online book is displayed, this information is used to determine the number of lines that appear in this topic for the active display device, and allows readers to go to a topic starting at a specific point (the top of the third screen, for example).

TOPIC# number

The number of this topic within the book. For example, TOPIC# "1" is the first topic in the book. This information is used with the TOPICS header control record to display the results of the POSITION command, which lets readers see their current location in the book.

3. FORMATTING control records occur within topics in the online book, freely interspersed with text and search records. Formatting control records always have a "C" in column one and are found in topics of the online book file. The format of all formatting control records is:

Ccontroltype [controldata]

Each of these records can occur numerous times in a topic and each refers to the first text record that follows.

There are numerous types of formatting control records:

.CP [parameters]- Conditional Page control word. When the online book is displayed, .CP is formatted just as DCF would format it. See Document Composition Facility SCRIPT/VS Language Reference (SH35-0070) for an explanation of all possible parameters.

.PA-Page Eject control word. When the online book is displayed, formats .PA just as DCF would format it.

.SK parameters- Skip control word. When the online book is displayed, formats .SK just as DCF would format it. See Document Composition Facility SCRIPT/VS Language Reference (SH35-0070) for an explanation of all possible parameters.

.SP parameters-Space control word. When the online book is displayed, formats .SP just as DCF would format it. See Document Composition Facility SCRIPT/VS Language Reference (SH35-0070) for an explanation of all possible parameters.

FONT startcolumn length font-Change the font of the specified text. The starting column and length of the text to be displayed are followed by a character previously defined by a FONTDEF header control record.

Except for the FONT record (which is constructed from backspace and overstrike characters), all of the formatting control records are created from control sequences.

4. Menu control records occur at the end of topics in the online book, listing topics that occur at the next level of the topic hierarchy. Menu control records always have a "C" in column one and are found at the end of topics of the online book file.

Menu control records list upcoming topics at the next lowest level of the topic hierarchy. For example, if an :H2 tag is followed by three :H3 tags, the topic created by the :H2 tag will contain menu control records listing the topics created by the three :H3 tags. When the online book is displayed, these records are used to show a selectable topic list that allows readers to skip to the topic they're looking for, as described below when discussing the usage of topic lists.

The format of all menu control records is:

Ccontroltype [controldata]

There are three types of menu control records:

EMENU-The end of a topic list menu.

MENU-The beginning of a topic list menu.

MITEM topicid topictitle-An item in a topic list menu. A MITEM control record lists an upcoming topic at the next level of the topic hierarchy. The record contains the topic's topic identifier and the title provided on its

18

heading tag.

5. Contents control records occur within the Table of Contents topic in the online book. Contents control records are created directly by the .TC macro in the Markup definitions 30. These are used by the author to indicate an item he wishes listed in the Table of Contents. The Post Processor 50 merely copies them into the book data stream 60.

Contents control records always have a "C" in column one and are found in the Table of Contents topic of the online book file.

When the online book is displayed, contents control records are used to display the book's table of contents, and their use is described in greater detail when the use of the Table of Contents is described below.

The format of all contents control records is:

Ccontroltype [controldata]

There are two types of contents control records:

TOCDEF level space indent font-A contents level definition. The level of heading (0-6) is followed by the number of blank lines to precede the heading on the contents screen, the number of spaces to indent the heading, and the font used to display the heading. (The font must have been defined with a FONTDEF header control record.) TOCE level topicid topictitle-A table of contents entry. The record contains the topic's heading level, topic identifier, and the title provided on its heading tag. (The heading level must have been defined on a previous TOCDEF control record.)

6. Index control records occur within the Index topic in the online book. Index control records are created directly by the .IE and .IX macros in the Markup definitions 30. The author will place these tags in the text at entries he wishes to appear in the index. The Post Processor 50 merely copies them into the book data stream 60.

Index control records always have a "C" in column one and are found in the Index topic of the online book file.

When the online book is displayed, Index control records are used to display the book's index in two columns.

There are three types of index control records:

GPSEP/group A group separator-The slash (/) in the above format stands for the delimiter character defined by a preceding IDELM control record. The GPSEP record is usually a single character that identifies the starting letter of subsequent index entries.

IDELM character-A character that delimits the parts of ITERM control records. There is only one IDELM record and it precedes all ITERM records.

ITERM/index term words/level/topicid-An index entry. The slash (/) in the above format stands for the delimiter character defined by a preceding IDELM control record. The ITERM record contains the one or more words in the index term, the level of the index entry (1-3), and the topic identifier that contains the entry.

The Indexer/Compressor 70 is used to create a search index for the book file 80 and to compress the book's text.

The search index is created using a linguistic dictionary that recognizes word morphologies. The root form (or lemma) of a word is related to all of its morphological variants. For example, the word party can match parties. Mouse can match mice. Is can match were. Additionally, synonyms of words can be matched.

The Indexer/Compressor 70 is described in copending application serial number XXX,XXX assigned to the assignee of the present invention.

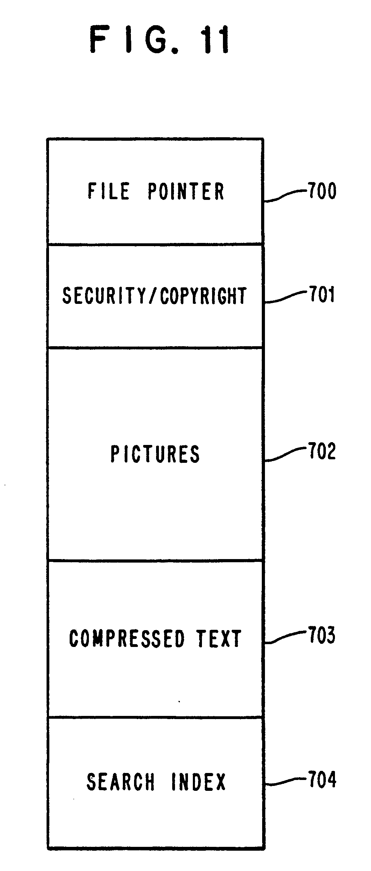

As shown in FIG. 11, an online book file contains the following elements:

1. FILE POINTER 700 which is the offset of the location of the compressed text. Ii.SECURITY/COPYRIGHT 701 which is the security classification and copyright notice of the book, taken from the SEC and COPYR attributes of the :GDOC or :USERDOC tags, if present.

2. PICTURES 1002, which are the GDDM ADMGDF (graphics) or GDDM ADMIMG (image) formats containing the pictures in the book.

3. COMPRESSED TEXT 703, which is the text in the book, in a compressed form to save disk space. It will be clear to those of skill in the art, however, that the compressor is not necessary if disk usage is not limited.

4. SEARCH INDEX 704, which includes the occurrence and location data about the words and phrases in the book.

## READING AN ONLINE BOOK

Once an online book is created, and the book data stream created as detailed hereinabove, the invention allows you to read, navigate, and search the book. The components of the reading phase are now described.

The reading phase of the invention manipulates the uncompressed form of the book data stream 60. In the preferred embodiment books are always compressed, to save disk space, so all reading from the book file includes decompression. While not described herein, it will be apparent that if the book data stream has been compressed, it will need to be uncompressed before proceeding with the method described herein.

Many hardware characteristics of the display device are used dynamically to present the book. These characteristics include the screen size, color capabilities and highlighting capabilities of the display.

The SUMMARY control record of the book data stream 60, discussed above, allows the book to be dynamically formatted on a screen of any length.

The FONTDEF control record, and the FONT control record, also described above, allow color and highlighting capabilities to be dynamically selected on any display device. For example a FONT record produced from a second-level highlighted phrase (:HP2) might be a different color (from normal text) on a color display device. On a monochrome device, it might be underscored. All the FONTDEF control records in a book are read before any topic is displayed.

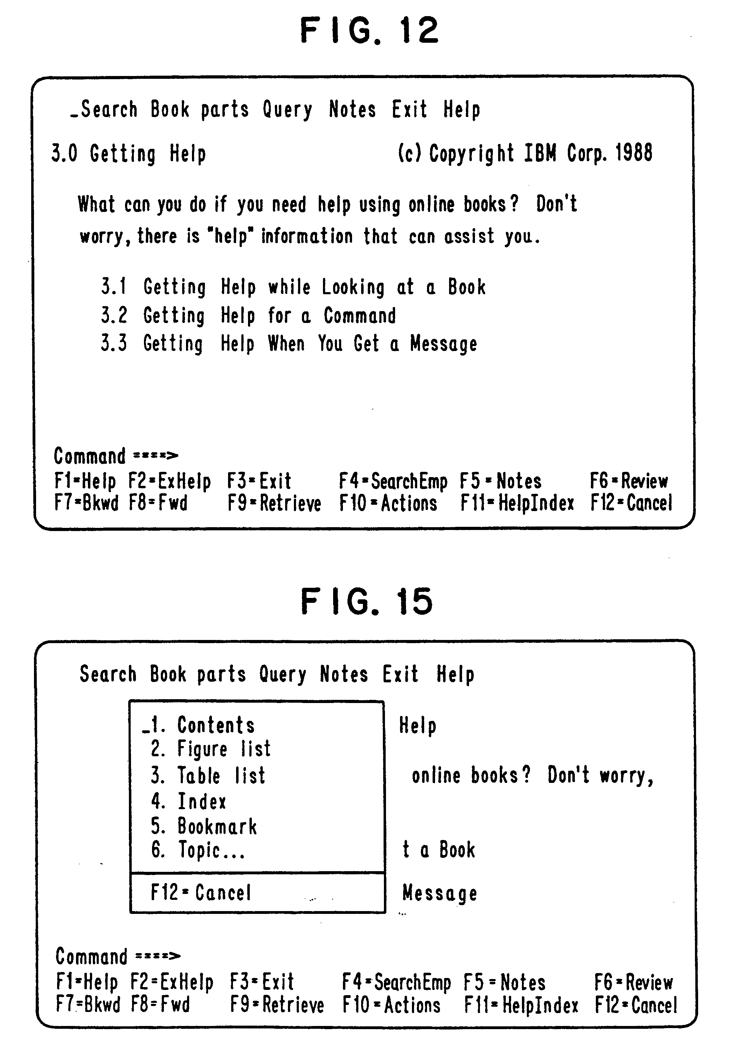

The book display program 90 converts the book data stream 60 into a book display output stream 120 that presents the book display on the screen 130. The book appears as shown in FIG. 12.

The general approach for displaying one screen of information from a book file on the screen is as follows:

1. Look for the topic. If a new topic is to be displayed,

    a. Position the book file to the topic and read the topic-related header records.
See the online book file architecture for a description of the content and format of these records.
A topic begins with a search record (SH) containing the topic identifier, and a control record (CTOPIC#) giving the internal sequence number of the topic. Other topic-related header records contain, for example, the topic title, the previous/next topic, the name of the source file for the topic.

    b. Set the starting and ending book file record locations for each of the topic's panels.
This is calculated from the topic summary record (CSUMMARY), using information about the screen size and the sizes of non-text elements currently on the screen (eg., position of the command line, number of lines required for the title and copyright/security information, lines devoted to the PF key display). This is done dynamically to take into account the formatting rules for line skipping, line spacing, and page ejects.

    c. Format the subtopic list (subtopic menu), if present.
There is a subtopic list if the topic ends with a CMENU/CEMENU control statement sequence. The records between these are CMITEM control records, which will be formatted with special screen attributes that allow selection.

2. If the topic is being displayed as a result of a search command, calculate the panel with the match.
The search engine provides function used to identify the location of the matching line.

3. If the topic is to be returned in the CMS queue, queue it and leave.
The RTRN YES option is an internal option used to request that the topic be put in the CMS queue. It is used, for example, to obtain an extended message description from the messages manual, or to obtain a command summary from the command summary reference manual. This function allows the invention to recursively invoke itself to provide help for its users. The text thus extracted from the help manuals is presented in an onscreen window.

4. If the topic has a note, set up to display the indicator on the status line.
Notes are kept in a separate file. They are associated with specific books by a simple naming convention. In the target operating system of the first implementation files have two-part names called, respectively, file name ('fn') and file type ('ft'). Each component of the two-part name may be up to 8 characters long. Online books are distinguished by a 'ft' of book. The files containing online notes for online books are named with an 'fn' that is the same as that of the book, and an 'ft' that corresponds to the userid of the person taking the notes. Thus files are easily distinguishable as to what class of file they are (online book or notes), and the files of online notes may be easily associated with their owners. The online notes themselves are stored by topic identifier, and line within the topic to which they apply. (The granularity of this method could easily be to the individual word within the line. The word-within-line information is captured and stored but not acted upon in the current implementation.)

5. If the note window is to display, set up to display it.

Whether a note window is to display depends on these factors:

a. The user of the book may command the book reading program explicitly to display notes if there are any. (This is called the NOTES SHOW function.)

b. The user of the book may be reviewing notes. (This is called the REVIEW NOTES function.)

6. If the book position is to display, set up to display it on the status line. The topic sequence number (CTOPIC#) is used to calculate the POSITION.

7. Display the topic.

This entails composing the screen and passing the description and contents of the screen to GDDM (the system-provided display device manager used in the preferred embodiment). In the preferred embodiment, this is done by programs which are written separately. This is done so as to maintain the device-independence of the invention. The programs that interface directly to the device drivers of an operating system need to reduce to specific device characteristics the information that has so far been carried in abstract form. How the display device interface program works is described further below.

Each of the non-text and textual elements of the screen is composed separately. For the purpose of this discussion, the non-text elements are: the action bar at the top of the screen, the tailorable function key display at the bottom of the screen (which may be entirely suppressed by the user or may show the meanings of up to 24 function keys), the command line (which may be at the top or bottom, at the user's preference), the message line (which is kept above the command line), the status line (which contains, for example, the indicator that a topic has notes associated with it), and any onscreen windows that must be shown.

The textual elements are composed of the records read from the topic. These include the topic identifier and title (SH and ST records, respectively), text records (blank in column 1), format controls (C records for spacing, skipping and page ejects), and font/highlighting controls (CFONT records). Some book-level information is also used in the composition of the topic display; specifically, we have previously read all the FONTDEF records, to know how to interpret the CFONT records. In the preferred embodiment the security and copyright information is stored at the book level, but could be set individually for each topic, if the markup language permitted it. Copyright or security information is displayed at the top of each screen along with the topic title.

The description of the composed screen is set into an array of program variables, and the display interface program is invoked. An example of the array is shown in Example 3.

8. Upon return from displaying the screen, reset variables and check for an action bar related choice. The program resets variables associated with the panel just displayed, for example, whether the terminal alarm should sound.

The book display program then determines if the user chose something related to the action bar, for example, an action bar choice, a pull down window choice.

a. If an action bar choice, create the pull down window.

b. If a pull down window choice for a pop up window, create the pop up window.

c. If a pull down window or pop up window choice for a command, set the command.

d. If a window-related function key choice, set the corresponding command.

9. If a pull down window or a pop up window was created, redisplay the topic.

10. If a notes window was displayed see if the note should be saved.

The subroutine Notesave checks if the note was changed. If it was, it uses the subroutine Notewrite to save the new notes file.

11. Remember the action taken by the user to allow RETRIEVE, REVIEW, and tracing.

12. If the user selected a topic from the QUERY SAVE window, remove it from the list.

The invention's display device interface includes three major functions, namely: 1)initialize the display device driver program (GDDM in this implementation), 2) display a screen using GDDM, and 3) display graphics or image using GDDM. These major functions are described below.

## 1. INITIALIZE THE DISPLAY DEVICE DRIVER:

This function is performed once only during the book display program. Its purpose is to extract from the operating system's display device manager pertinent information about the end user's display device. The device characteristics are preserved for use by the other functions. TABLE 5 lists the information stored.

TABLE 5

| Field | Length | Description |
|---|---|---|
| Flag 77 | 1 | 3277 flag: 0 or 1 |
| CharAtt | 1 | Character attributes: 0 or 1 |
| System | 3 | System: CMS or ESO |
| APLflag | 1 | APL Flag: 0 or 1 |
| RowsNr | 3 | Rows on screen |
| ColsNr | 3 | Columns on screen |
| BoxH | 2 | Height of character box |
| BoxW | 2 | Width of character box |
| ColorNr | 2 | Number of colors |
| High | 1 | Hilight feature: 0 or 1 |
| PSSNr | 2 | Number of program symbol stores |

## 2. DISPLAY A SCREEN USING GDDM:

This function has available the information about device characteristics described in TABLE 5. It receives the description of the composed screen that has been previously set into an array of program variables for its use. An example of data in the array is shown in Example 3.

There are three types of records in the array:

a. Control records are used to provide information to this function. They have an asterisk (*) in column one. Following the asterisk is a keyword that describes the information:

1) OPTIONS Defines global settings for the display interface program, such as whether the current data on the screen should be cleared, or whether it should wait for input after displaying the screen. The OPTIONS record must be the first record in the array.

2 ATTRNR Defines the number of ATTR records to follow. The ATTRNR record must precede all ATTR records.

3) ATTR Defines an attribute character. Attribute characters that follow escape characters in data records signify a change in display characteristics. Attribute characters that do not follow escape characters are treated as text. Attribute characters can change field type (protected, unprotected, light pen), color, or highlighting.

4) ESC Defines the escape character. When this character appears in a data record, the next character is examined to see if it matches an attribute character.

5) EATTR Defines the end attribute character. When this character follows the escape character in a data record, it ends the field started by the preceding attribute character. The default display characteristics (set by the Entity record) are restored.

b. ENTITY Defines a separate part of the screen. They have a plus sign (+) in column one. The name following the plus sign is the name of the entity. The information provided on an entity record includes all of the information on an attribute record, which defines the default display characteristics for that entity. Attribute characters (with escape characters) in the data can override these defaults.

Entity records also include the location of the entity on the screen, and whether the data is in field or character attribute format. If this entity overlays other entities, a GDDM partition is created to display the entity.

Entity records are sometimes followed by records that define cursor location (+CURSOR) and the color of borders (+TOPBORDER) around the entity.

c. DATA Provides data to be placed within the current entity. They have a blank in column one. Data records are displayed using the characteristics defined by their entity, except that data following escape characters and attributes are displayed as the attributes are defined.

The device characteristics tell whether the device supports character or field attributes. The last entity record tells whether the data was formatted as character attribute data or field attribute data. Depending on the combination of these conditions, one of the following actions is taken:

a. The character data is aligned for a character device.

b. The field data is aligned for a character device.

c. The Field routine is called to display each field in the data record.

The screen is displayed, a response from the user is awaited, if needed. The response is returned to the book display program through settings of program variables. The following information is returned:

. the name of the entity that contains the cursor

. the cursor location

. the values of all input areas

. the cause of the interrupt (key press, light pen, etc.)

. any light pen area that was selected

## 3. DISPLAY GRAPHICS OR IMAGE USING GDDM:

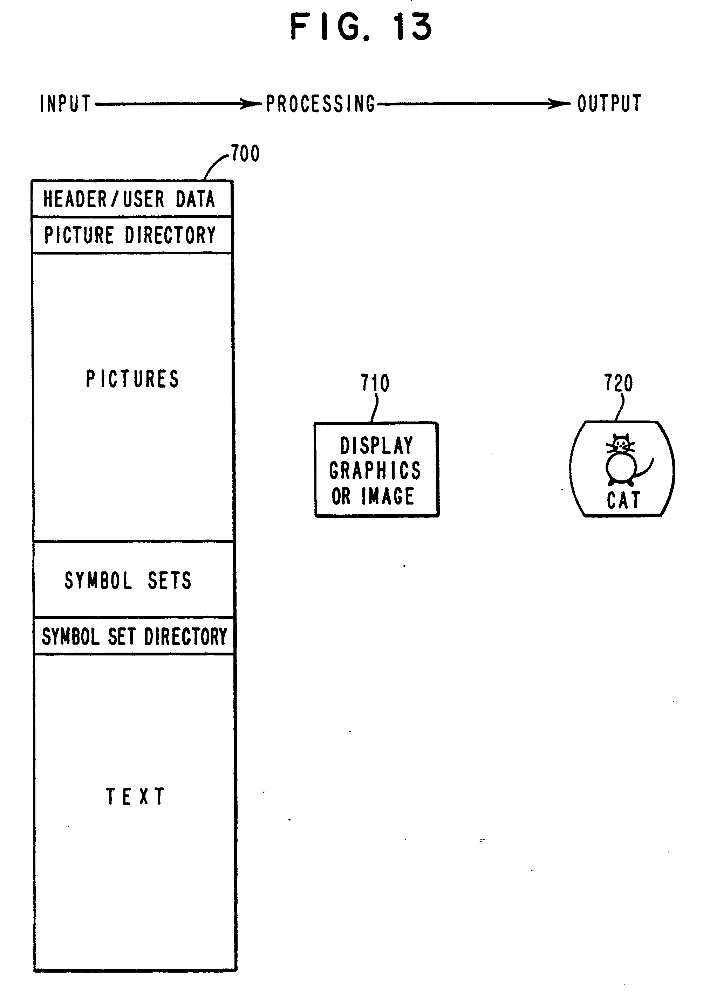

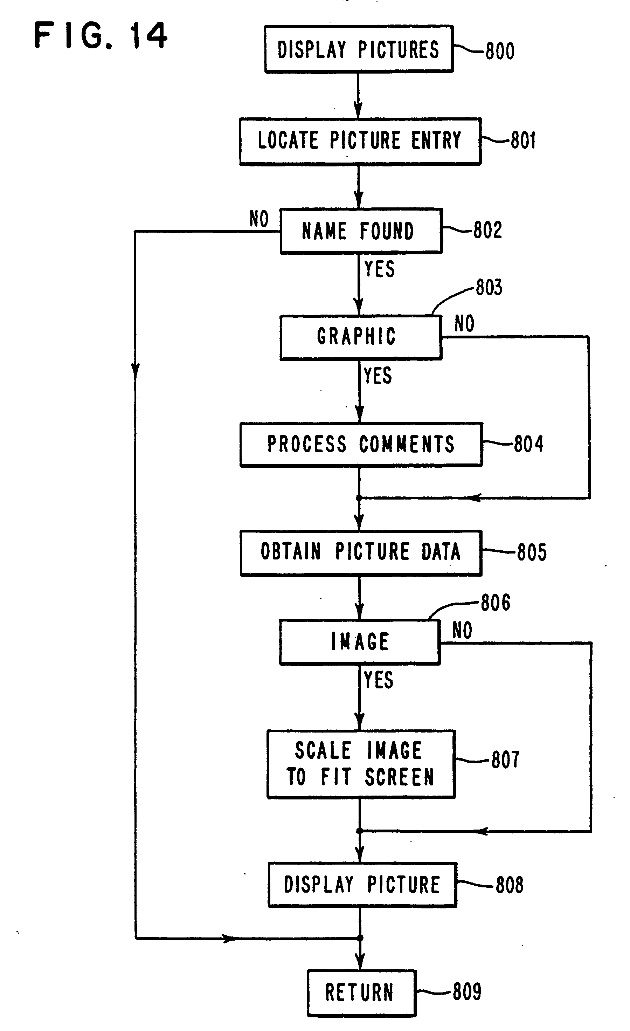

This function is called by the book display program's PICTURE command to display a GDDM picture. It has available the device characteristics information described in TABLE 5. It uses the data structure created by the Post Processor 50 Picture Phase (shown in FIG. 10) to quickly load and display the picture. A Hierarchical Input Output diagram for the display picture process is shown in FIG. 13. A flowchart of the display-pictures flow is provided in FIG. 14. Pictures are requested by name.

Refer now to FIG. 13. The book file 700, corresponding to the structure shown in FIG. 10, is processed at 710 to provide a display 720.

Referring to FIG. 14, the process for displaying pictures begins at 800. At step 801 the picture entry is located. If its name is not found,the routine exits at 809. Otherwise process continues and determines if the picture is graphic at step 803. If so, process comments at 804 are obtained and the picture data obtained at step 805. If not processing jumps to step 805 where the picture data is obtained. At step 806 the picture data obtained is examined to determine if it is an image. If it is not the picture is displayed at step 808. If it is, it is scaled to fit the screen at step 807 and then displayed at step 808. After the picture is displayed the routine is exited from via step 809.

a. First the number of pictures in the file is checked--if it's zero, return immediately.

b. If there are pictures in the file, use the picture name directory to find the picture. If the picture exists, use the image/graphic indicator to choose which GDDM calls should be used to load the picture. Using GDDM commands, the picture data is restored from the book file to the GDDM area, from which it can then be displayed.

c. If it's a graphic, (that is, it originated from an ADMGDF file), the GDF comment orders which preceded the visual data are read and used to set up the environment for the picture before it is loaded. For example, if a picture requires a symbol set to be loaded, use the symbol set directory to find and load the needed symbol set.

d. For ADMIMG format pictures (scanned images), the image has to be scaled to fit the display screen, and it is centered on the screen.

e. Finally, process the response to the picture. If the response is to enter GDDM User Control Mode, call user control to allow zooming and panning the graphic. User Control Mode is not allowed for image pictures.

Now the novel elements of the invention that imitate a hard copy book are described.

Just as hard copy books are read by turning pages, an online book is read by turning its pages, or panels. Pressing thc "Fwd" function key, F8, turns forward in a book. Pressing the "Bkwd" function key, F7, turns backward in a book.

The "BACKWARD" and "FORWARD" commands also can be used to turn several panels at once. For example,

Command = = => forward 3

turns ahead three panels.

The "LEVEL" operand of the "BACKWARD" and "FORWARD" commands can be used to skip to the topic at the same level in the hierarchy as the one on the screen. For example, if topic 2.0 is being displayed,

Command = = => forward level

turns ahead to topic 3.0, even if there are other lower-level topics (2.1, 2.2, etc.) in between.

The invention includes all of the familiar parts of hard copy books online for easy navigation through the information. The "book parts" action allows selection of the table of contents, figure list, table list, and index. The book parts action window is shown in FIG. 15.

To see a book's table of contents, select "Contents" from the "book parts" action window, or enter "CONTENTS" in the command area.

When "Contents", is selected, the book's table of contents is displayed. It looks very similar to a hard copy table of contents, except the titles are followed by topic identifiers instead of page numbers. To see a topic, select its topic identifier. Each entry has the topic heading followed by the topic identifier of the topic. From the table of contents, a topic can be selected to be shown.

The table of contents is formatted from the TOCDEF and TOCE control records described below.

To see a book's figure list, select "Figures" from the "book parts" action window, or enter "FIGURES" in the command area.

When "Figure list" is selected, the book's figure list is displayed. It looks very similar to a hard copy figure list, except the titles are followed by topic identifiers instead of page numbers. To see a topic, select its topic identifier. A figure list may look like this: Each entry has a figure number, followed by the figure caption, followed by the topic identifier of the topic that has the figure. From the figure list, a topic can be selected to be shown.

To see a book's table list, select "Table list" from the "book parts" action window, or enter "TABLES" in the command area.

When "Table list" is selected, the book's table list is displayed. It looks very similar to a hard copy table list, except the titles are followed by topic identifiers instead of page numbers. To see a topic, select its topic identifier. Each entry has a table number, followed by the table caption, followed by the topic identifier of the topic that has the table. From the table list, a topic can be selected to be shown.

To see a book's index, select "Index" from the "book parts" action window, or enter "INDEX" in the command area. When "Index" is selected, the book's index is displayed. It looks very similar to a hard copy index, except the index terms have topic identifiers instead of page numbers. To see a topic, select its topic identifier. From the index, a topic can be selected to be shown. Also, a letter can be entered in the command area to see the panel with the index terms beginning with that letter.

The index is formatted from the GPSEP, IDELM, and ITERM control records described below.

While reading a hard copy book, a reader often needs to save his place. He may want to temporarily save his place while reading, for example, by keeping his finger on the page. He may also want to save his place when he closes a book, for example, by inserting a bookmark. The invention lets him do these things while reading an online book.

A reader may, while looking for information in a book, want to go back to places that he's already seen. He can mark certain topics temporarily so they can be found later.

The SAVE command makes it easy to save a place in a book. This command can be used in any topic of the book to be saved:
Command = = => save
The reader can then wander away from the saved topic and return to it whenever he wants. He can save several places and go back to them in the order in which he saved them. Topics stay marked until the reader closes the book or returns to the saved place.

The RECALL command is used to return to the most recently saved place:
Command = = => recall
The invention also provides a "REVIEW" command, that lets readers back-track through all topics previously seen, without having to SAVE them.

The QUERY SAVE command is used to see a list of the places that have been saved:
Command = = => query save
There are times when a reader wants to save a home base within a book. This is like putting a paper clip on a certain page. No matter where else the reader goes in the book, he can always return to this spot whenever he wants. The home base is saved until a new home base is saved or the book is closed.

The SAVE HOME command is used to save a home base:
Command = = => save home
The RECALL HOME command always returns to the home base:
Command = = => recall home
These commands make it convenient to examine other places from a home base, and return to it later.

When a reader closes a book, he can put a bookmark at the place in the book where he stopped, and, later, he can reopen the book to the bookmark.

"Exit" is one of the actions always available to the reader. When "Exit" is selected, a window for closing the book is shown. "Exit book with bookmark" can be chosen to leave the book, thereby saving the place for the next time the book is opened. The bookmark information is stored on disk 140.

When a reader opens a book that has a bookmark, he is told that there is a bookmark. To go to the place that is marked, he uses the "book parts" action window see Figure 14 or the BOOKMARK command:

Command = = => bookmark

The topic with the bookmark is shown and the bookmark is removed.

One of the major difficulties in using information is understanding the structure of the information without losing context. The invention understands the structure of the online book. There are several ways in which this knowledge can be used by the reader to retain the context of the information.

One way the invention helps retain the context information is by displaying lists of upcoming topics to allow readers to see, and quickly jump to, lower levels of the topic hierarchy. This is similar to a partial table of contents or subject tabs in hard copy books. For example, if a GML source file contains a first-level heading (:H1), followed by three second-level headings (:H2s), the text for the :H1 would be followed by a list of the three :H2 headings, as shown in FIG. 14. The reader can place his cursor on any of the topic identifiers, such as 3.2, and press ENTER to go directly to that topic.

This is an easy way to navigate down the hierarchy to more and more specific information, until eventually the needed information is found.

Topic lists are created from the MENU, MITEM, and EMENU control records described previously.

The SECTION command is used to see the section to which the current topic belongs. This is the topic above the current topic. For example, if topic 3.11.2 is being displayed, entering "SECTION" shows topic 3.11. If "SECTION" is entered while viewing topic 3.11, then topic 3.0 shows. The SECTION command is an easy way to back-track up the hierarchy (the reverse direction from topic lists).

The SECTION command uses the PARENT control record, described above, to determine the topic to go to.

It is also possible for readers to display the context of a topic in the topic hierarchy. This example requests a list of topics that are above the current topic:

Command = = = => query context

The QUERY CONTEXT command uses the PARENT control record described above to determine the hierarchy.

The position command is used to find out where the reader is--the place in the book 110. This is equivalent to looking at the side of a hard copy book to see how much has been read, and how much is left to read. The depiction of position may be done in several ways. The current implementation provides two ways of doing it.

"POSITION SCALE" requests that the position be shown on a scale. For example, the response:

bookposition: |......*...|

indicates that the topic being displayed is about three-quarters into the book. SCALE is the default.

The preferred embodiment uses an idealized horizontal depiction of the position scale. The scale is shown with ten divisions, and the position is rounded to the nearest ten percent. Other methods of depiction could use a vertical scale, or different granularity of depiction.

"POSITION PERCENT" requests that the position be shown as a percentage. For example, the response:

bookpercent: 75%

indicates that the topic being displayed is about 75% into the book.

The invention also provides several functions to make and view notes for a book. In addition to making notes on topics for personal use, notes from others can be distributed and reviewed. The notes are stored on disk 150, separately from the book itself.

LOOKING AT THE NOTES IN A BOOK: To view a note, select "Make or change a note" from the "Notes" action window, or enter "NOTES" in the command area. The note window is displayed.

The bottom of the note window shows function keys that make it convenient to use the various notes functions. Function key 3 (End), for example, removes the note window from the screen.

A note can be larger than the note window. Function key 8 scrolls forward to create or see additional lines. Function key 7 scrolls back.

The invention makes it convenient to review just the topics that have notes. This is particularly useful for going through a book looking at notes from other readers, and is described in further detail below.

To look at only topics that have a note, enter:

Command = = => review notes

The review notes function begins with the first note in the book.

Using this review function changes the meaning of the ENTER key. The next topic note or line note is

25

displayed when ENTER is pressed. When the last note has been reviewed, reviewing ends and the ENTER key returns to its normal function.

To make or change a note, select "Make or change a note" from the "Notes" action window, or enter "NOTES" in the command area. A note window is displayed, which becomes the note input area.

When a topic has a note, a message appears on the panel. Also, if the topic has line-related notes, each line with a note has the character > at the beginning of the line. The reader can change the contents of a note by typing in the note window.

A note is created for the entire topic by leaving the cursor in the command area when requesting the note function. It is sometimes useful to associate a note with a particular line of text within the topic. To do this, put the cursor on the line and request the note function.

1. To create a line note using the NOTES command, type the command "NOTES" in the command area, move the cursor to a text line, and press the ENTER key.

2. To create a line note using the NOTES function key, move the cursor to a text line, and press the function key for NOTES. By default, this is function key 5. Notes can be created for any number of topic lines. Each line with a note is identified with the character > to the left of the line.

Another function key, for example function key 4, is used while within the note window to delete an entire note. The entire note window is removed and the topic or line no longer has a note.

Notes from other readers can be accessed with the "NOTES ADD" command with that reader's userid. Alternately, the "QUERY NOTES ALL" command can be used to obtain a list of all readers who have notes for this book.

Several readers' notes can be placed into a single notes file by issuing a "NOTES MERGE" command with the userids of the readers.

To send notes to another reader, select "Send notes" from the "Notes" action window, or enter "NOTES SEND" in the command area. A special panel allows entry of the userid and node of the reader to whom the notes should be sent.

One of the more powerful functions of the invention is the way it handles notes and their association with a book. A simple procedure can be followed so that:

1. A writer uses the invention to create an online book, then sends it out for review. Sending out for review may mean the physical transmission of the book file over telecommunication links, or making the book file available to other users on a multi-user computing system that has file sharing capability.

2. A reviewer looks at the book online and creates comments on the book as described above.

3. The reviewer's comments are sent to the book originator and shared as previously described.

4. The book originator reviews the original book online and sees the reviewer's comments on the book. Use of notes from others and review of topics with notes has been previously described.

The invention can also list available online books, from which a book can be opened or its catalog card (as in a library's card catalog index) can be displayed.

EXAMPLE 1

An example of a GMI, source file for a real book about Local Area Networks is shown below.

```
:gdoc sec='Unclassified'.
:frontm
:titlep
:title.Local Area Networks
:docnum.01-00
:date.November 9, 1987
:author.IBM Corporation
:address.
:aline.Corporate Headquarters
:aline.Armonk, NY
:eaddress
:etitlep
:toc.
:figlist
:body
:h0.Introduction
:p.This document talks about :hp1.Local Area Networks:ehp1.
(LANs).
:hp2.Read this document to learn how they work:ehp2..
:p.You can learn:
:ol
:li.When you need a LAN
:li.How to share hardware devices using:
:ol
:li.File servers
:li.Print servers
:eol
:li.How LANs are connected
:eol
:h1.What LANs Do
:p.Local Area Networks connect personal computers to one another
so that PC users can share data and software.
When two users are connected to a LAN, they :hp3.never:ehp3.
have to pass floppy disks to each other to share information
or programs.
:p.You can also use LANs to share a printer or fixed disk.
Some LAN systems allow two users to :hp2.simultaneously:ehp2.
update the same database.
:p.You can even connect LANs to :hp3.host:ehp3. computers!
:h1.How LANs Work
:p.This section discusses how LANs share hardware devices
and how they are connected.
:h2.Sharing Hardware Devices
:p.LANs can save you money by letting multiple PC users share
an expensive fixed disk or printer.
LANs do this using :hp1.servers:ehp1., which are PCs that
control the hardware.
Most people use :hp1.file servers:ehp1. and :hp1.print servers:ehp1..
:h3.File Servers
:p.One common use for a local area network is to share access to a
fixed disk that contains files that
are needed by multiple PC users.
```

EXAMPLE 1 (continued)

To accomplish this, one PC in the LAN accepts requests from the
users' PCs to read and write records in the shared files.
:il.server
This PC is called the file server, and its operation is shown in
:figref refid='serve'..
:fig frame=rule id='serve' place=inline.

```
                              PC
                              |
                              |
                 .PC --- Server --- Fixed Disk
                              |
                              |
                              PC
```

:figcap.A File Server
:efig
:note.This diagram depicts a LAN that uses a :hpl.star topology:ehpl..
See :hdref refid='top' for information about topologies.
:h3.Print Servers
:il.printing
:p.Another way to use a local area network is to share access to a
printer.
To accomplish this, one PC in the LAN accepts requests from the
users' PCs to print data on the shared printer.
:il.server
This PC is called the print server, and its operation is shown below.
:hp3.A PC can be a print server and a file server simultaneously:ehp3..
:fig frame=rule place=inline

```
                              PC
                              |
                              |
                 PC --- Server --- PC
                              |
                              |
                           Printer
```

:figcap.A Print Server
:efig.
:note.This diagram depicts a LAN that uses a :hpl.star topology:ehpl..
See :hdref refid='top' for information about topologies.
:h2 id='top'.Connections
:il id='top'.topology
:p.Local Area Networks can be connected in two topologies:
:ul compact
:i2 refid='top'.ring
:il.ring topology
:li.ring
:i2 refid='top'.star
:il.star topology
:li.star
:eul.
:p.See :figref refid='LANtop' for an illustration of each.
:fig id='LANtop' frame='rule' place=inline.

## EXAMPLE 1 (continued)

```
    PC ------- PC                              PC
    |          |                               |
    |PC        |                  PC --- Server --- PC
    |          |                               |
    |          |                               |
    PC ----- Server                            PC

:figcap.Ring and Star Topologies
:efig
:index
:egdoc.
```

## EXAMPLE 2

An example of records found in the Book data stream (60) for a real book about Local Area Networks is shown below.

Some of the SUMMARY control records are too long to fit easily on a printed page. Records that end in three dots have been truncated for this example.

```
LENGLISH
CVERSION=1.0
CSOURCE=PCLAN SCRIPT
CTITLE=Local Area Networks
CSTITLE=Local Area Networks
CCOPYRIGHT=
CSECURITY=Unclassified
CRESMAT1=
CRESMAT2=
CRESMAT3=
CDATE=November 9, 1987
CAUTHOR=IBM Corporation
CALINE=Corporate Headquarters
CALINE=Armonk, NY
CDOCNUM=01-00
CFRONT=FRONT
CCONTENTS=CONTENTS
CFIGURES=FIGURES
CTABLES=TABLES
CINDEX=INDEX
CLDRDOTS=DOT
CFONTDEF=0 H0
CFONTDEF=H H1
CFONTDEF=I H2
CFONTDEF=J H3
CFONTDEF=K H4
CFONTDEF=L H5
CFONTDEF=M H6
CFONTDEF=_ UNDERSCORE
CFONTDEF=1 HP1
CFONTDEF=2 HP2
CFONTDEF=3 HP3
CFONTDEF=4 HP4
CFONTDEF=5 HP5
CFONTDEF=6 HP6
CFONTDEF=7 HP7
CFONTDEF=8 HP8
CFONTDEF=9 HP9
CFONTDEF=A APL
CFONTDEF=C CIT
CFONTDEF=B CAUTION
CFONTDEF=F CAUTIONTEXT
CFONTDEF=D DANGER
CFONTDEF=O DANGERTEXT
CFONTDEF=W WARNING
CFONTDEF=G WARNINGTEXT
CFONTDEF=P PK
CFONTDEF=Q PKDEF
CFONTDEF=V PV
```

EXAMPLE 2 (continued)

```
CFONTDEF=Z PVDEF
CFONTDEF=T TP
CFONTDEF=R RK
CFONTDEF=X XPH
CFONTDEF=E XMP
CFONTDEF=U MD
CFONTDEF=Y MDQUAL
CSUMDELIM=#
CMARGIN=2
CREVISIONS
CRC | 5 8
CEREVISIONS
CTOPICS=11
SHTITLE
CTOPIC# 1
CPARENT
CFORWARDLEVEL CONTENTS
CBACKLEVEL
CSUMMARY TITLE .CP#.SP 12#T1#.SK 12#T1#.SK 2#T1#.SK 9#T1#.SK 1#.SP 1#...
CHDLEVEL :TITLE
CSOURCEFN PCLAN
ST  Title Page
C.CP
C.SP 12
CFONT 58 5 2
CFONT 64 4 2
CFONT 69 8 2                                              Local Area Networks

C.SK 12                                               Document Number 01-00

C.SK 2                                                    November 9, 1987

C.SK 9                                                     IBM Corporation

C.SK 1
C.SP 1                                               Corporate Headquarters
                                                              Armonk, NY

C.SK 3
CFONT 65 12 2                                                 Unclassified

C.SK 3
SHCONTENTS
CTOPIC# 2
CPARENT
CFORWARDLEVEL FIGURES
CBACKLEVEL TITLE
CSUMMARY CONTENTS #1L16#1L26#1L29#0L16#1L16#1L17#2L30#3L20#3L21#2L17#1L11
CHDLEVEL :TOC
CSOURCEFN PCLAN
ST  Table of Contents
CTOCDEF=0 1 0 2
CTOCDEF=1 1 0 2
CTOCDEF=2 0 0
CTOCDEF=3 0 2
CTOCDEF=4 0 4
CTOCDEF=5 0 6
CTOCDEF=6 0 8
CTOCE 1 TITLE Title Page
```

EXAMPLE 2 (continued)

```
CTOCE 1 CONTENTS Table of Contents
CTOCE 1 FIGURES List of Illustrations
CTOCE 0 1.0 Introduction
CTOCE 1 1.1 What LANs Do
CTOCE 1 1.2 How LANs Work
CTOCE 2 1.2.1 Sharing Hardware Devices
CTOCE 3 1.2.1.1 File Servers
CTOCE 3 1.2.1.2 Print Servers
CTOCE 2 1.2.2 Connections
CTOCE 1 INDEX Index
SHFIGURES
CTOPIC# 3
CPARENT
CFORWARDLEVEL 1.0
CBACKLEVEL CONTENTS
CSUMMARY FIGURES T3#.SK 2
CHDLEVEL :FIGLIST
CSOURCEFN PCLAN
ST  List of Illustrations
CSELECT 70 7 T
   Figure  1. A File Server  . . . . . . . . . . . . . . . . . . . . . 1.2.1.1
CSELECT 70 7 T
   Figure  2. A Print Server  . . . . . . . . . . . . . . . . . 1.2.1.2
CSELECT 72 5 T
   Figure  3. Ring and Star Topologies  . . . . . . . . . . . . . . . 1.2.2
C.SK 2
SH1.0
CTOPIC# 4
CPARENT
CFORWARDLEVEL
CBACKLEVEL FIGURES
CSUMMARY 1.0 .SK 1#T2#.SK 1#T1#.SK 1#T1#.SK 1#T1#.SK 1#T1#.SK 1#T1#.SK 1#T1#.SK 2
CHDLEVEL :H0
CSOURCEFN PCLAN
ST  Introduction
C.SK 1
CFONT 29 5 1
CFONT 35 4 1
CFONT 40 8 1
CFONT 58 4 2
CFONT 63 4 2
CFONT 68 8 2
   This document talks about Local Area Networks (LANs).  Read this document
CFONT 3 2 2
CFONT 6 5 2
CFONT 12 3 2
CFONT 16 4 2
CFONT 21 4 2
   to learn how they work.
C.SK 1
   You can learn:
C.SK 1
   1. When you need a LAN
C.SK 1
   2. How to share hardware devices using:
C.SK 1
      a. File servers
C.SK 1
```

## EXAMPLE 2 (continued)

```
        b.  Print servers
C.SK 1
   3.  How LANs are connected
C.SK 2
CMENU
CMITEM 1.1 What LANs Do
CMITEM 1.2 How LANs Work
CMITEM INDEX Index
CEMENU
SH1.1
CTOPIC# 5
CPARENT 1.0
CFORWARDLEVEL 1.2
CBACKLEVEL
CSUMMARY 1.1 .SK 1#T4#.SK 1#T2#.SK 1#T1#.SK 2
CHDLEVEL :H1
CSOURCEFN PCLAN
ST  What LANs Do
C.SK 1 ·
 | Local Area Networks connect computers to one another so that PC users can
    share data and software.  When two users are connected to a LAN, they
CFONT 3 5 3
    never have to pass floppy disks to each other to share information or
    programs.
C.SK 1
    You can also use LANs to share a printer or fixed disk.  Some LAN systems
CFONT 22 14 2
    allow two users to simultaneously update the same database.
C.SK 1
CFONT 32 4 3
    You can even connect LANs to host computers!
C.SK 2
SH1.2
CTOPIC# 6
CPARENT 1.0
CFORWARDLEVEL INDEX
CBACKLEVEL 1.1
CSUMMARY 1.2 .SK 1#T2#.SK 2
CHDLEVEL :H1
CSOURCEFN PCLAN
ST  How LANs Work
C.SK 1
    This section discusses how LANs share hardware devices and how they are
      connected.
C.SK 2
CMENU
CMITEM 1.2.1 Sharing Hardware Devices
CMITEM 1.2.2 Connections
CEMENU
SH1.2.1
CTOPIC# 7
CPARENT 1.2
CFORWARDLEVEL 1.2.2
CBACKLEVEL
CSUMMARY 1.2.1 .SK 1#T3#.SK 2
CHDLEVEL :H2
CSOURCEFN PCLAN
ST  Sharing Hardware Devices
C.SK 1
```

33

EXAMPLE 2 (continued)

```
    LANs can save you money by letting multiple PC users share an expensive
CFONT 46 7 1
    fixed disk or printer.  LANs do this using servers, which are PCs that
CFONT 42 4 1
CFONT 47 7 1
CFONT 59 5 1
CFONT 65 7 1
    control the hardware.  Most people use file servers and print servers.
C.SK 2
CMENU
CMITEM 1.2.1.1 File Servers
CMITEM 1.2.1.2 Print Servers
CEMENU
SH1.2.1.1
CTOPIC# 8
CPARENT 1.2.1
CFORWARDLEVEL 1.2.1.2
CBACKLEVEL
CSUMMARY 1.2.1.1 .SK 1#T5#.SP 1#T10#.SP 1#T2#.SK 1#T2#.SK 2
CHDLEVEL :H3
CSOURCEFN PCLAN
ST  File Servers
C.SK 1
  | A common use for a local area network is to share access to a fixed disk
    that contains files that are needed by multiple PC users.  To accomplish
    this, one PC in the LAN accepts requests from the users' PCs to read and
SI server
    write records in the shared files.  This PC is called the file server, and
    its operation is shown in Figure 1.
C.SP 1
    ////////////////////////////////////////////////////////////////////////////


                                      PC
                                      |
                                      |
                       PC --- Server --- Fixed Disk
                                      |
                                      |
                                      PC

C.SP 1
    Figure 1.  A File Server
    ////////////////////////////////////////////////////////////////////////////
C.SK 1
CFONT 3 5 2
CFONT 48 4 1
CFONT 53 8 1
    Note: This diagram depicts a LAN that uses a star topology.  See
    "Connections" in topic 1.2.2 for information about topologies.
C.SK 2
SH1.2.1.2
CTOPIC# 9
CPARENT 1.2.1
CFORWARDLEVEL
CBACKLEVEL 1.2.1.1
CSUMMARY 1.2.1.2 .SK 1#T5#.SP 1#T10#.SP 1#T2#.SK 1#T2#.SK 2
CHDLEVEL :H3
CSOURCEFN PCLAN
SI printing
```

EXAMPLE 2 (continued)

```
ST  Print Servers
C.SK 1
     Another way to use a local area network is to share access to a printer.
     To accomplish this, one PC in the LAN accepts requests from the users' PCs
SI server
     to print data on the shared printer.  This PC is called the print server,
CFONT 38 1 3
CFONT 40 2 3
CFONT 43 3 3
CFONT 47 2 3
CFONT 50 1 3
CFONT 52 5 3
CFONT 58 6 3
CFONT 65 3 3
CFONT 69 1 3
CFONT 71 4 3
     and its operation is shown below.  A PC can be a print server and a file
CFONT 3 6 3
CFONT 10 14 3
     server simultaneously.
C.SP 1
```

```
                            PC
                            |
                            |
                PC --- Server --- PC
                            |
                            |
                          Printer
```

```
C.SP 1
     Figure 2.  A Print Server
```

```
C.SK 1
CFONT 3 5 2
CFONT 48 4 1
CFONT 53 8 1
     Note: This diagram depicts a LAN that uses a star topology.  See
     "Connections" in topic 1.2.2 for information about topologies.
C.SK 2
SH1.2.2
CTOPIC# 10
CPARENT 1.2
CFORWARDLEVEL
CBACKLEVEL 1.2.1
CSUMMARY 1.2.2 .SK 1#T1#.SK 1#T2#.SK 1#T1#.SP 1#T10#.SP 1#T2#.SP 1
CHDLEVEL :H2
CSOURCEFN PCLAN
SI topology
ST  Connections
C.SK 1
     Local Area Networks can be connected in two topologies:
C.SK 1
SI topology, ring
SI ring topology
SI topology, star
SI star topology
     ⅄   ring
```

35

## EXAMPLE 2 (continued)

```
   ¼   star
C.SK 1
    See Figure 3 for an illustration of each.
C.SP 1
```

```
C.SP 1
    Figure 3.  Ring and Star Topologies
```

```
C.SP 1
SHINDEX
CTOPIC# 11
CPARENT 1.0
CFORWARDLEVEL
CBACKLEVEL 1.2
CSUMMARY INDEX T13
CHDLEVEL :INDEX
CSOURCEFN PCLAN
ST  Index
CIDELM /
CGPSEP /P
CITERM /printing/1/1.2.1.2
CGPSEP /R
CITERM /ring topology/1/1.2.2
CGPSEP /S
CITERM /server/1/1.2.1.1/1.2.1.2
CITERM /star topology/1/1.2.2
CGPSEP /T
CITERM /topology/1/1.2.2
CITERM /ring/2/1.2.2
CITERM /star/2/1.2.2
CENDINDEX
```

## EXAMPLE 3

An example of an array passed from the book display program to to the display interface is shown here. This is a piece of the book shown in "Book Data Stream (60) Example" on page 63

Note: Some of the characters in the array are unprintable. A pound sign (#) is used as the end attribute and a dollar sign ($) is used as the escape character in this example.

```
*OPTIONS   0 0 1
*ATTRNR    059
*ATTR      1 0 0 2 1 â FKeys
*ATTR      7 0 0 3 1 ä Menu
*ATTR      6 0 0 2 2 à Hp2
*ATTR      6 4 0 2 2 á Hp3
*ATTR      7 0 0 0 1 ã Notemsg
*ATTR      5 4 0 2 2 å Hp1
*ATTR      7 0 0 2 1 ç Arrow
*ATTR      5 2 0 2 2 ñ RK
*ATTR      2 1 0 2 2 é DANGER
*ATTR      2 0 0 2 2 ê CAUTION
*ATTR      6 0 0 2 2 ë WARNING
*ATTR      4 4 0 0 1 î CmdInp
*ATTR      4 0 0 0 1 î NoteInp
*ATTR      2 2 0 2 2 ï Hp7
*ATTR      2 1 0 2 2 ì Hp8
*ATTR      2 0 0 2 2 ß Hp9
*ATTR      2 0 0 2 2 Â Hp5
*ATTR      2 4 0 2 2 Ä Hp6
*ATTR      5 0 0 2 2 À Hp4
*ATTR      5 4 0 2 2 Á Under
*ATTR      5 2 0 2 2 À TP
*ATTR      1 0 0 2 2 ≈ BLUE
*ATTR      2 0 0 2 2 ≈ RED
*ATTR      3 0 0 2 2 ⌐ PINK
*ATTR      4 0 0 2 2 | GREEN
*ATTR      5 0 0 2 2 ⌐ TURQUOISE
*ATTR      6 0 0 2 2 ⊤ YELLOW
*ATTR      7 0 0 2 2 ≈ WHITE
*ATTR      5 2 0 2 2 Å FIND
*ATTR      5 2 0 2 2 Ç Reverse
*ATTR      5 1 0 2 2 Ñ Blink
*ATTR      6 0 0 2 1 ↑ Title
*ATTR      7 0 0 2 1 · Message
*ATTR      5 0 0 2 1 ≈ Document
*ATTR      7 0 0 2 1 ≈ Menunoinp
*ATTR      4 4 0 2 1 ≈ Inpfnoinp
*ATTR      1 0 0 2 1 ü Pfknoinp
*ATTR      7 0 0 2 1 ú Border
*ATTR      4 0 0 2 1 ù Ninpnoinp
*ATTR      5 0 0 3 1 ≈ Menu normal color
*ATTR      7 2 0 3 1 ≈ Menurev
*ATTR      6 0 0 2 1 ' Warning message
*ATTR      4 0 0 2 2 ø PV
*ATTR      7 0 0 2 2 É PK
*ATTR      4 4 0 2 2 Ê PVDEF
*ATTR      7 4 0 2 2 Ë PKDEF
```

37

EXAMPLE 3 (continued)

```
*ATTR      7 0 0 2 2 È XPH
*ATTR      G 4 0 2 2 Í H0
*ATTR      6 4 0 2 2 Î H1
*ATTR      6 4 0 2 2 Ï H2
*ATTR      6 0 0 2 2 Ì H3
*ATTR      5 4 0 2 2 ⚹ H4
*ATTR      5 4 0 2 2 : H5
*ATTR      5 0 0 2 2 / H6
*ATTR      1 4 0 2 1 0 :MD
*ATTR      1 0 0 2 1 a MDQUAL
*ATTR      7 0 0 1 1 b LINENOTE
*ESC                 $ Escape character
*EATTR               # Attribute field END
+TOPIC     5 0 N 2 1 0 0 005 002 009 079 N C
  Local Area Networks connect computers to one another so that PC users can
  share data and software. When two users are connected to a LAN, they
  $ánever$# have to pass floppy disks to each other to share information or
  programs.


  You can also use LANs to share a printer or fixed disk.  Some LAN systems
  allow two users to $àsimultaneously$# update the same database.


  You can even connect LANs to ⚹àhost⚹è computers!
+ACTBAR    5 0 N 2 2 0 0 001 004 002 077 N F
  $ä Search$ä Book parts$ä Query$ä Notes$ä Exit$ä Help $#


+TITLE     5 0 N 2 2 0 0 003 002 001 079 N F
  $↑1.1 What LANs Do                                    Unclassified
+COMMAND    7 0 A 2 1 0 0 030 003 001 078 N F
  Command ===> $⚹
+PFS        1 0 P 2 1 0 0 031 003 001 078 N F
   $ä F1=Help$ä F2=ExHelp$ä F3=Exit     $ä F4=SearchEmp $ä F5=Notes      $ä F6=Review
+PFS        1 0 P 2 1 0 0 032 003 001 078 N F
   $ä F7=Bkwd$ä F8=Fwd    $ä F9=Retrieve $ä F10=Actions  $ä F11=HelpIndex $ä F12=Cancel
+CURSOR                 015 019
+TOPBORDER 7 0 N 2 1 1 N 000 N F
+WINDOW1    5 0 N 2 1 1 1 003 002 009 060 R F


   $⚹ *. List all topics with search words... $#
   $⚹ *. Go to best topic         $#
   $⚹ *. Go to next best topic     $#
   $⚹ *. Go to next occurrence from this spot in the book $#
   $ä 5. Enter new search words...$#
   $ä 6. Set search options...$#


   $ä F1=Help $# $ä F12=Cancel $#
+TOPBORDER 7 0 N 2 1 1 N 000 N F
+WINDOW2    5 0 N 2 1 1 1 010 005 008 062 R F


   - Enter below the words or phrases to search for.
   - Use commas to separate single words or phrases.
   - Use an asterisk (*) at the end of a word to stand for
     any letter(s).
   Search for $î&Pdinput                              $#


   $ä F1=Help $è $ä F9=Retrieve $è $ä F12=Cancel $#
+EOF
```

**Claims**

1. A method for creating online books from print oriented source files, comprising the steps of:

formatting said source file using a print oriented text formatter (20), said print oriented text formatter using specially defined online formatting definitions (30), to create a formatted text stream;

post processing said formatted text stream in a text phase (50) to provide a book data stream;

post processing pictures in a picture phase (50A) to provide picture information; and

combining said book data stream and said picture information into a book file (80) having a predetermined format.

2. The method according to claim 1 further comprising a method for dynamically displaying online books from said book file, said method of displaying comprising the steps of:

providing display characteristics (100) of a display device on which said book is to be displayed;

processing said book file and said display device characteristics to provide a book display output stream; and

displaying (130) said book on said display device.

3. The method according to claim 2 further comprising the steps of storing place information in a first disk file (140), and storing annotations in a second disk file (150).

# FIG. 1

```
┌─────────────┐
│   SOURCE    │
│  DOCUMENT   │──── 10
│    FILE     │
└─────────────┘
       │
       ▼
┌─────────────┐              ┌─────────────┐
│    TEXT     │── 20         │   MARKUP    │── 30
│  FORMATTER  │──────────────│ DEFINITIONS │
└─────────────┘              └─────────────┘
       │
       │── 40
       ▼
┌─────────────┐
│    POST     │
│  PROCESSOR  │──── 50
│ (TEXT PHASE)│
└─────────────┘
       │
       │── 60
       ▼
┌─────────────┐── 70
│  INDEXER1   │
│ COMPRESSOR  │
└─────────────┘
       │          51          52          53
       │       ┌────────┐  ┌────────┐  ┌────────┐
       │       │PICTURE │  │PICTURE │  │PICTURE │
       │       │ FILES  │  │ FILES  │  │ FILES  │
       │       │(GRAPHICS)  │        │  │(IMAGE) │
       │       └────────┘  └────────┘  └────────┘
       │            │           │           │
       ▼            ▼           ▼           ▼
┌─────────────┐        ┌──────────────────────┐
│  BOOK FILE  │        │    POST PROCESSOR    │
│  STORED ON  │◀───────│   (PICTURE PHASE)    │
│    DISK     │        │                      │
└─────────────┘        └──────────────────────┘
       │                          │
       80                        50A
```

# FIG. 2

```
            ┌──────────────────┐                    ┌──────────┐
            │ ..THE TEXT TO BE │                    │ MARKUP   │
  10 ───────│ FORMATTED IN THE │───────────────────▶│ DEF FOR  │─── 30
            │ BOOK. .PA        │                    │ .PA      │
            │ TEXT TO START ON.│                    └──────────┘
            └──────────────────┘                          │
                     │                                     │
            ┌──────────────────┐                           │
            │ ..THE TEXT TO BE │                           │
            │ FORMATTED IN THE │                           │
  40 ───────│ BOOK. ESC..PA END│◀──────────────────────────┘
            │ TEXT TO START ON.│
            └──────────────────┘
                     │
            ┌──────────────────┐                    ┌──────────┐
            │ ..THE TEXT TO BE │                    │ .PA      │
            │ FORMATTED IN THE │                    │ CONTROL  │
  60 ───────│ BOOK. C.PA       │◀───────────────────│ RECORD   │
            │ TEXT TO START ON.│                    └──────────┘
            └──────────────────┘
                     │
            ┌──────────────────┐
            │   DYNAMICALLY    │
  90 ───────│    FORMATTED     │
            │      TEXT        │
            └──────────────────┘
                     │
            ┌──────────────────┐
            │ PANEL 1          │
            │ ..THE TEXT TO BE │
 131 ───────│ FORMATTED IN THE │
            │ BOOK.            │
            └──────────────────┘
                     │
            ┌──────────────────┐
            │ PANEL 2          │
 132 ───────│ TEXT TO START ON.│
            │                  │
            └──────────────────┘
```

# FIG. 3

# FIG. 4

```
...HIGHLIGHTED TEXT
IN THE:HP1 BOOK         10
FILE:EHP1. IF YOU
LOOK AT THE...
```

```
MARKUP
DEF          30
FOR:HP1
```

```
...HIGHLIGHTED TEXT
IN THE BOOK ////1111    40
FILE ////1111 IF YOU
LOOK AT THE...
```

```
...HIGHLIGHTED TEXT
IN THE                 60
CFONT 141, CFONT 641
BOOK FILE IF YOU...
```

```
FONT
CONTROL
RECORD
(FONT 1)
```

```
...HIGHLIGHTED
TEXT IN THE BOOK       135
FILE IF YOU LOOK
AT THE...
```

# FIG. 5A

200             201

| POINTER TO FIRST BLOCK | POINTER TO LAST BLOCK |
|---|---|

202       203       204    205

| POINTER TO NEXT BLOCK | POINTER TO PREVIOUS BLOCK | LENGTH (0) | DATA |
|---|---|---|---|

# FIG. 5B

200           201

| POINTER TO FIRST BLOCK | POINTER TO LAST BLOCK |
|---|---|

210      211      212    213

| POINTER TO NEXT BLOCK | POINTER TO PREVIOUS BLOCK | LENGTH | DATA |
|---|---|---|---|

205

214      215      216    217

| POINTER TO NEXT BLOCK | POINTER TO PREVIOUS BLOCK | LENGTH | DATA |
|---|---|---|---|

206

220      221      222    223

| POINTER TO NEXT BLOCK | POINTER TO PREVIOUS BLOCK | LENGTH | DATA |
|---|---|---|---|

207

# FIG. 6

| 220 | 221 | 222 |
|---|---|---|
| NUMBER OF LIST ITEMS | POINTER TO OFFSET TABLE | POINTER TO LIST DATA |

| XEENTRY STRUCTURE--LIKE VARI |
|---|

223

| XE STRUCTURE--LIKE VARI |
|---|

224

# FIG. 7

INPUT ——————→ PROCESSING ——————→ OUTPUT

| | 8 | —300 |
|---|---|---|
| PICTURE A | G | |
| PICTURE B | I | |
| PICTURE C | I | |
| | | |
| PICTURE H | G | |

301
PICTURES

302
PICTURE A

305
SYMSETH

303
PICTURE H

304
PICTURE B

307
POST
PROCESSOR
PICTURE
PHASE

308

| 310— | HEADER/USER DATA |
|---|---|
| 311— | PICTURE DIRECTORY |
| 312— | PICTURES |
| 313— | SYMBOL SETS |
| 314— | SYMBOLSET DIRECTORY |

# FIG. 8

```
        ┌─────────────────────┐
        │   STORE PICTURES    │──── 400
        └─────────────────────┘
                   │
                   ▼
    ┌──────────────────────────────┐
    │ INITIALIZE HEADER 3 USER DATA │──── 401
    └──────────────────────────────┘
                   │
                   ▼
  NO      ┌─────────────────────┐ ── 402
  ◄───────│  PICTURES EXIST ?   │
          └─────────────────────┘
                   │ YES
                   ▼
          ┌─────────────────────┐
          │   EXTRACT & INSERT  │──── 403
          │    PICTURE DATA     │
          └─────────────────────┘
                   │
                   ▼
          ┌─────────────────────┐ ── 404
          │   SYMBOL  SETS ?    │  NO
          └─────────────────────┘
                   │ YES
                   ▼
          ┌─────────────────────┐
          │   EXTRACT & INSERT  │──── 405
          │   SYMBOL SET DATA   │
          └─────────────────────┘
                   │
                   ▼
          ┌─────────────────────┐
          │       INSERT        │──── 406
          │   SYMBOL SET DATA   │
          └─────────────────────┘
                   │
                   ▼
          ┌─────────────────────┐
          │ INSERT PICTURE INDEX│──── 407
          └─────────────────────┘
                   │
                   ▼
          ┌─────────────────────┐
          │   OUTPUT BOOK FILE  │──── 408
          └─────────────────────┘
                   │
                   ▼
          ┌─────────────────────┐
          │        EXIT         │──── 409
          └─────────────────────┘
```

# FIG. 9

# FIG. 10

| NUMBER OF 4K PICTURE BLOCKS | UNUSED | NUMBER OF PICTURES |
|---|---|---|
| 2 BYTES | 2 BYTES | 4 BYTES |

— 600

| BOOK'S SECURITY OR COPYRIGHT NOTICE |
|---|
| 256 BYTES |

— 610

620

| NO. OF SYMBOL SETS | SYMBOL SET DIRECTORY POINTER | DIRECTORY LENGTH | DIRECTORY POINTER |
|---|---|---|---|
| 4 BYTES | 4 BYTES | 4 BYTES | 4 BYTES |

PICTURE NAME DIRECTORY

| PICTURE NAME | IMAGE OR GRAPHIC ? | PICTURE LENGTH | PICTURE POINTER |
|---|---|---|---|
| 8 BYTES | 1 BYTE | 3 BYTES | 4 BYTES |

— 630

| PICTURE DATA |
|---|

— 640

| SYMBOL SET DATA |
|---|

— 650

SYMBOL SET DIRECTORY

| SYMBOL SET NAME | SS TYPE | SS IDENTIFIER | SS LENGTH | SS POINTER |
|---|---|---|---|---|
| 8 BYTES | 4 BYTES | 4 BYTES | 4 BYTES | 4 BYTES |

— 660

| PAD TO A 4K BOUNDARY |
|---|

— 670

# F I G. 11

| | |
|---|---|
| FILE POINTER | ─700 |
| SECURITY/COPYRIGHT | ─701 |
| PICTURES | ─702 |
| COMPRESSED TEXT | ─703 |
| SEARCH INDEX | ─704 |

# FIG. 12

```
_Search Book parts Query Notes Exit Help

3.0 Getting Help                    (c) Copyright IBM Corp. 1988

   What can you do if you need help using online books?  Don't
   worry, there is "help" information that can assist you.


      3.1  Getting  Help while Looking at a Book
      3.2  Getting  Help for a Command
      3.3  Getting  Help When You Get a Message




Command ====>
F1=Help F2=ExHelp  F3=Exit      F4=SearchEmp F5=Notes      F6=Review
F7=Bkwd F8=Fwd      F9=Retrieve  F10=Actions  F11=HelpIndex F12=Cancel
```

# FIG. 15

```
Search Book parts Query Notes Exit Help

      ┌──────────────────────────┐
      │ _1. Contents              │  Help
      │  2. Figure list           │
      │  3. Table list            │   online books?  Don't worry,
      │  4. Index                 │
      │  5. Bookmark              │
      │  6. Topic...              │  t a Book
      ├──────────────────────────┤
      │ F12=Cancel                │  Message
      └──────────────────────────┘

Command ====>
F1=Help F2=ExHelp  F3=Exit      F4=SearchEmp F5=Notes      F6=Review
F7=Bkwd F8=Fwd      F9=Retrieve  F10=Actions  F11=HelpIndex F12=Cancel
```

# FIG. 13

INPUT ⟶ PROCESSING ⟶ OUTPUT

700

| HEADER/USER DATA |
| PICTURE DIRECTORY |
| PICTURES |
| SYMBOL SETS |
| SYMBOL SET DIRECTORY |
| T E X T |

710

| DISPLAY GRAPHICS OR IMAGE |

720

CAT

FIG. 14

```
        DISPLAY PICTURES ─── 800
                │
                ▼
        LOCATE PICTURE ENTRY ─── 801
                │
                ▼
  NO ◄──── NAME FOUND ─── 802
                │ YES
                ▼
                            ─ 803
          GRAPHIC ──NO──┐
                │ YES      │
                ▼          │
        PROCESS COMMENTS ─── 804   │
                │          │
                ▼◄─────────┘
        OBTAIN PICTURE DATA ─── 805
                │
                ▼
                         ─ 806
           IMAGE ──NO──┐
                │ YES     │
                ▼         │
        SCALE IMAGE
        TO FIT SCREEN ─── 807   │
                │         │
                ▼◄────────┘
        DISPLAY PICTURE ─── 808
                │
                ▼
            RETURN ─── 809
```